# EUROPEAN PATENT APPLICATION

(11) **EP 1 398 936 A2**
(43) Date of publication of application: **17.03.2004**
(21) Application number: 03019602.6
(22) Date of filing: 04.09.2003
(51) Int. Cl.: H04L 29/06, H04L 12/56

(54) **Service providing method**

(30) Priority: 11.09.2002 JP 2002265703
(71) Applicant: MATSUSHITA ELECTRIC INDUSTRIAL CO., LTD., Kadoma-shi, Osaka 571-8501 (JP)
(72) Inventor: Oomoto, Masao, Kasuya-gun Fukuoka-ken 811-2416 (JP); Ando, Satoshi, Munakata-gun Fukuoka-ken 811-3217 (JP); Kawaguchi, Yuichi, Kasuya-gun Fukuoka-ken 811-2413 (JP); Shimizu, Yuji, Koga-shi Fukuoka-ken 811-3114 (JP)
(74) Representative: Pautex Schneider, Nicole

(57) **Abstract**

The video server (2) provides a service of lower quality than that of the service which a user demanded within the limits of a reservable bandwidth, when a bandwidth required for providing the service which a user has demanded cannot be reserved. Therefore, although quality is lower than the quality which a user demands, a service can be received at least when a user wants to receive the service. Therefore, a user's dissatisfaction can be released, as compared with the case where service is not provided at all.

## Description

This invention relates to the service providing method of providing a QoS (Quality of Service) guarantee and the related technologies.

Today, a protocol called RSVP (Resource Reservation Protocol) has been discussed as a bandwidth reservation type communication system. This system reserves a required bandwidth in the order of arrival. When a bandwidth which a user demands is not reservable, the demand is refused. The user does not know whether there are rooms in a bandwidth, if a re-demand is not made. Therefore, the user has to make a re-demand continuously until a bandwidth becomes available for the user. This fact causes the user inconvenience.

As references which relate conventional technologies to improve such inconvenience, there are published Japanese Patent Application Laid-Open No. 1998-243018 (patent reference No.1) and published Japanese Patent Application Laid-Open No. 1997-117739 (patent reference No.2).

The bandwidth reservation method in the prior art disclosed by patent reference No.1, changes bandwidth reservation dynamically on a time-axis.

This conventional bandwidth reservation method is explained in detail in the following.

In the content distribution system on the Internet, a user accesses a content server and operates a GUI (graphical user interface) screen to make a reservation demand that a user wants to see, for example, a movie "AAA" at 13:00-15:00 on March 15.

The content server manages reservation status.

Therefore, when reservation is impossible in the time zone in which the user made the reservation demand, a content server notifies a reservation failure or shows an alternative time zone which is able to be reserved around the time zone that the user made the reservation.

When the available bandwidth is narrow, published Japanese Patent Application Laid-Open No. 2000-138680 (patent reference No. 3) disclosed a technology of securing a bandwidth, although the bandwidth is narrow, and transmitting data. However, according to this disclosure, as a result of forcefully transmitting data via a narrow bandwidth, the quality of the data transmitted is not guaranteed. It cannot be expected which portion of data will be missing, and it will be happened that a receiving person cannot display an image at all.

However, there is also a case where a user wants to see a data immediately anyhow. Such a case that a service is not available to a user when a user wants to receive the service may cause a user's dissatisfaction against the side which offers the service.

The object of the present invention is to provide a service providing method which can provide a service much as possible as when a user make a demand for receiving the service, thus releasing a user's dissatisfaction as much as possible.

The service-providing method concerning to the first invention is a service-providing method using a service-providing unit operable to provide a requested service comprising the step providing a service having lower quality than quality of the requested service, when a network resource required for the requested service is not reservable.

With this construction, even when it is impossible to provide a service of the quality that a user demands, a service with lower quality can be provided.

Therefore, although the quality of the provided service is lower than the quality of the service that a user demands, a service can be provided at least when a use wants to receive the service, a user's dissatisfaction can be lessened as compared with the case a service is not possible to be provided at all.

The service-providing method concerning to the second invention is a service-providing method using a service-providing unit operable to provide a requested service comprising the step checking whether or not a network resource required for the requested service is reservable to generate a first result, the step checking whether or not a network resource required for a service of lower quality than the quality of the requested service is reservable to generate a second result, when the first result shows that the network resource required for the requested service is not reservable, the step notifying that the service of lower quality is reservable to request a response, when the second result shows that the service of lower quality is reservable, and the step providing the service of lower quality, when the response shows that the service of lower quality is requested.

With this construction, even when it is impossible to provide a service of the quality that a user demands, a service with lower quality can be provided.

Therefore, although the quality of the provided service is lower than the quality of the service that a user demands, a service can be provided at least when a use wants to receive the service, a user's dissatisfaction can be lessened as compared with the case a service is not possible to be provided at all.

The service-providing method concerning to the third invention is a service-providing method using a service-providing unit operable to provide a requested service comprising, the step checking whether or not a network resource required for the requested service is reservable to generate a first result, the step checking whether or not a network resource required for a service of lower quality than the quality of the requested service is reservable to generate a second result, when the first result shows that the network resource required for the requested service is reservable, and the step providing the service of lower quality, when the second result shows that the service of lower quality is requested.

With this construction, even when it is impossible to provide a service of the quality that a user demands, a service with lower quality can be provided.

Therefore, although the quality of the provided service is lower than the quality of the service that a user demands, a service can be provided at least when a use wants to receive the service, a user's dissatisfaction can be lessened as compared with the case a service is not possible to be provided at all.

The service-providing method concerning to the fourth invention is a service-providing method using a service-providing unit operable to provide a requested service comprising the service-providing method concerning to the second invention, and the service-providing method concerning to the third invention, wherein the service-providing method concerning to the second invention and the service-providing method concerning to the third invention are able to be switched over.

With this construction, a user's convenience can be increased

The service-providing method of the fifth invention is the service-providing method, further comprising, the step providing a service having higher quality than quality of a current service, when a network resource required for a service of higher quality than the quality of the current service is reservable.

With this structure, since a service of high quality that a user demands at the beginning is provided when the service becomes possible to be provided, the user's satisfaction can be raised.

The service-providing method concerning to the sixth invention is the service-providing method, further comprising, the step checking whether or not a network resource required for a service of higher quality than quality of a current service is reservable to generate a third result, the step notifying that the service of higher quality is reservable to request an additional response, when the third result shows that the service of higher quality is reservable, the step providing the service of higher quality, when the additional response shows that the service of higher quality is requested.

With this structure, when a service of high quality that a user demands at the beginning becomes possible to be provided, and when the user requests for providing, the service of high quality is provided to the user. Hence the user's satisfaction can be raised.

The service-providing method concerning to the seventh invention is the service-providing method, further comprising, the step checking whether or not a network resource required for a service of higher quality than the quality of a current service is reservable to generate a third result, the step providing the service of higher quality, when the third result shows that the service of higher quality is reservable.

With this structure, since a service of high quality that a user demands at the beginning is provided when the service becomes possible to be provided, the user's satisfaction can be raised.

The service-providing method concerning to the eight invention is a service-providing method using a service-providing unit operable to provide a requested service comprising the service-providing method concerning to the sixth invention and the service-providing method concerning to the seventh invention, wherein the service-providing method concerning to the sixth invention and the service-providing method concerning to the seventh invention are able to be switched over.

With this structure, a user's convenience can be raised.

The service-providing method concerning to the ninth invention is a service-providing method using a service-providing unit operable to provide a requested service comprising, the step checking an availability of a network resource to generate a first result, the step judging whether or not the requested service is able to provide, based on the first result, to generate a second result, the step preventing from requesting a service that is not able to provide, based on the second result.

With this structure, it is impossible for a user to request providing a service that is not possible to be currently provided.

Consequently, the impression that the user's expectation might have been betrayed can be lessened, as compared with the case where the demand is completely refused, although the service is required.

The service-providing method concerning to the tenth invention is a service-providing method using a service-providing unit operable to provide a service chosen from a list of available services comprising, the step checking an availability of a network resource to generate a first result, the step judging whether or not the requested service is able to provide, based on the first result, to generate a second result, and the step recording the list an item that is able to distinguish between an available service and an unavailable service, based on the second result.

With this structure, a currently unavailable service is shown to a user beforehand.

Consequently, the impression that the user's expectation might have been betrayed can be lessened, as compared with the case where the demand is completely refused, although the service is required. In other words, a user's dissatisfaction can be released.

The service-providing method concerning to the eleventh invention is the service-providing method, further comprising, preventing from selecting an unavailable service on the list.

With this structure, a currently unavailable service is not possible to be selected or requested by a user. Therefore, the user's dissatisfaction can be released.

The service-providing method concerning to the twelfth invention is the service-providing method as defined in claim 1, wherein the network resource is a bandwidth.

With this structure, a situation where a remaining part of the available bandwidths is not used at all can be avoided as much as possible, and hence the bandwidth is effectively used.

The above, and other objects, features and advantages to the present invention will become apparent from the following description read in conjugate with the accompanying drawing, in which like reference numerals designate the same elements.
Fig. 1 is a block diagram of a home network system according to Embodiment 1 of the present invention;
Fig. 2 shows a state where a television is in access to a video server to receive a service;
Fig. 3 shows a state where a PC is receiving video data from an external network;
Fig. 4 shows a state where a television can not receive a service of quality that the television has requested;
Fig. 5 shows a state where a television can not receive a service of quality that the television has requested;
Fig. 6 shows an illustrative communication procedure according to Embodiment 1 of the present invention;
Fig. 7 is a block diagram of a video server shown in Fig. 1;
Fig. 8 is a block diagram of a network resource management server shown in Fig. 1;
Fig. 9 is an exemplified table stored in a communication path/reservation information database shown in Fig. 8;
Fig. 10 shows an illustrative communication procedure according to the first modification for Embodiment 1 of the present invention;
Fig. 11 shows an illustrative communication procedure according to Embodiment 2 of the present invention;
Fig. 12 shows an illustrative communication procedure according to the first modification for Embodiment 2 of the present invention;
Fig. 13 and Fig. 14 are block diagrams of a home network system according to Embodiment 3 of the present invention;
Fig. 15 is a flow chart of a video server according to Embodiment 3 of the present invention;
Fig. 16 is a block diagram of a video server according to Embodiment 3 of the present invention;
Fig. 17 to Fig. 31 show illustrative videos for the user interface according to Embodiment 3 of the present invention.

Hereafter, the embodiment of the present invention is explained with reference to figures.

### (Embodiment 1)

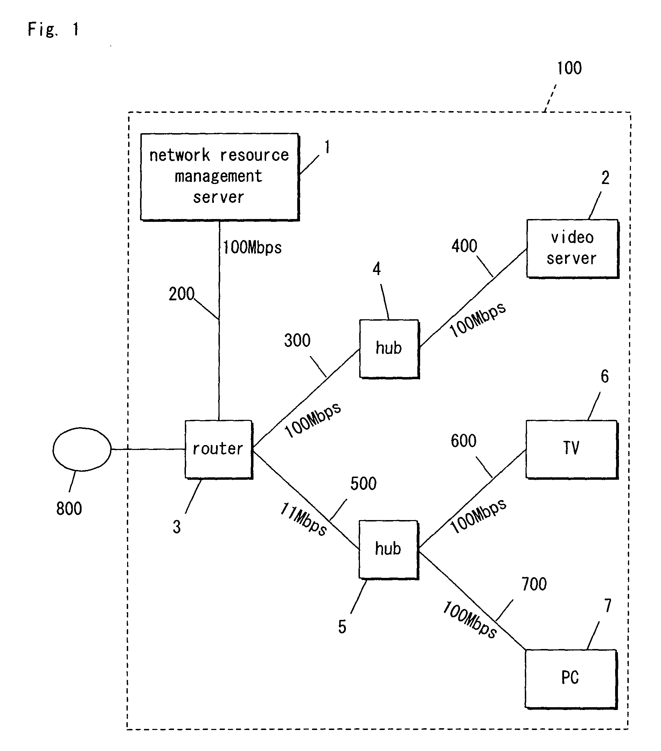

Fig. 1 is a block diagram of a home network system according to Embodiment 1 of the present invention.

As shown in Fig. 1, a home network system 100 comprises a network resource management server 1, a video server 2, a router 3, hubs 4 and 5, a television 6, a personal computer (hereafter referred to as "PC".) 7, and links 200, 300, 400, 500, 600, and 700.

The network resource management server 1 and the router 3 are connected by the link 200.

The router 3 and the hub 4 are connected by the link 300. The hub 4 and the video server 2 are connected by the link 400.

The router 3 and the hub 5 are connected by the link 500. The hub 5 and the television 6 are connected by the link 600. The hub 5 and the PC 7 are connected by the link 700.

The router 3 is connected to a network 800. The network 800 is the Internet.

In the above home network system 100, in order to guarantee a quality of service, a network resource can be reserved. A bandwidth is mentioned as an example of a network resource.

Hereafter, functions and operations of each composition of the home network system 100 are explained in the sequel.

The network resource management server 1 has the function to manage the state of used bandwidth of the links 200 to 700 in the home network system 100.

The video server 2 has the function to save video data, has the function of transmitting video data to the television 6 or the PC 7, which connected to the home network 200.

Moreover, in the case of transmitting video data, the video server 2 has the function to transmit after converting the video data into an arbitrary transmission rate transmission rates if necessary.

6Mbps (bit per second) in the high-quality image mode of MPEG 2 and 3Mbps in the standard-quality image mode of MPEG 2 are examples of the transmission rate.

The television 6 has the function to control the video server 2 distantly. The television 6 also has the function to receive video data sent from the video server 2, and to display the video data on a screen.

The PC 7 is a computer for general purpose. For example, the PC 7 has various functions of displaying a video after accessing to the video server 2, and displaying a video after accessing to the video server that connected to the network 800.

The available bandwidth of the link 200 is set to 100Mbps, the available bandwidth of a link 300 is set to 100Mbps, the available bandwidth of a link 400 is set to 100Mbps, the available bandwidth of the link 600 is set to 100Mbps, and the available bandwidth of the link 700 is set to 100Mbps.

The available bandwidth of the link 500 is set to 11Mbps.

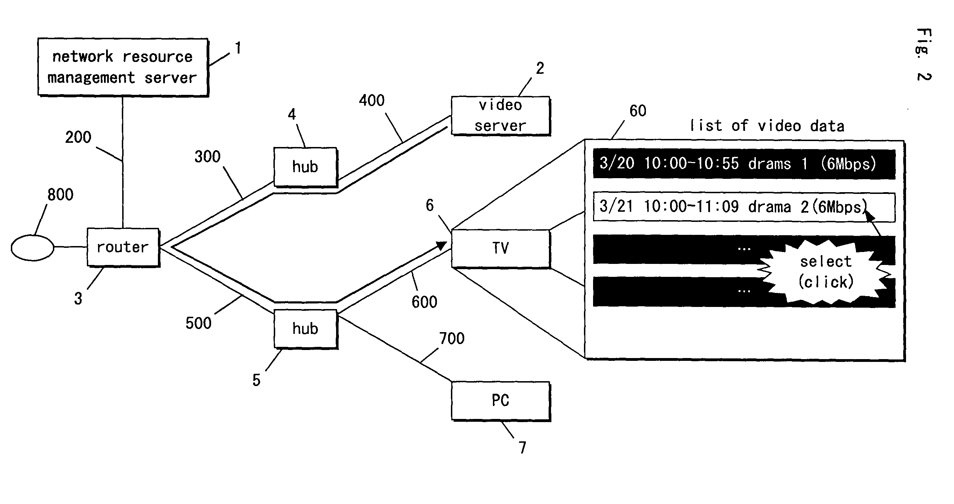

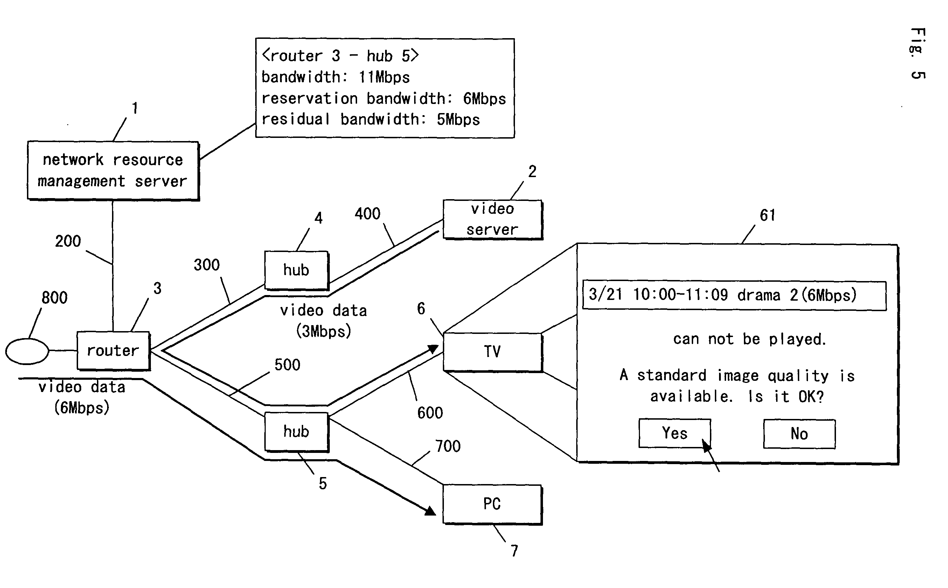

Below, an example of service-providing in the home network 100 is explained using Fig. 2 from Fig. 5.

Fig. 2 shows a state where a television is in access to a video server to receive a service.

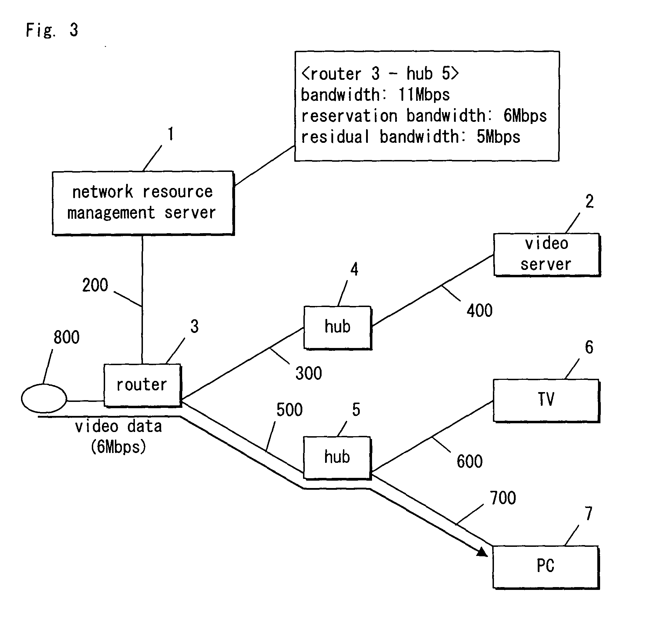

Fig. 3 shows a state where a PC 7 is receiving video data from an external network.

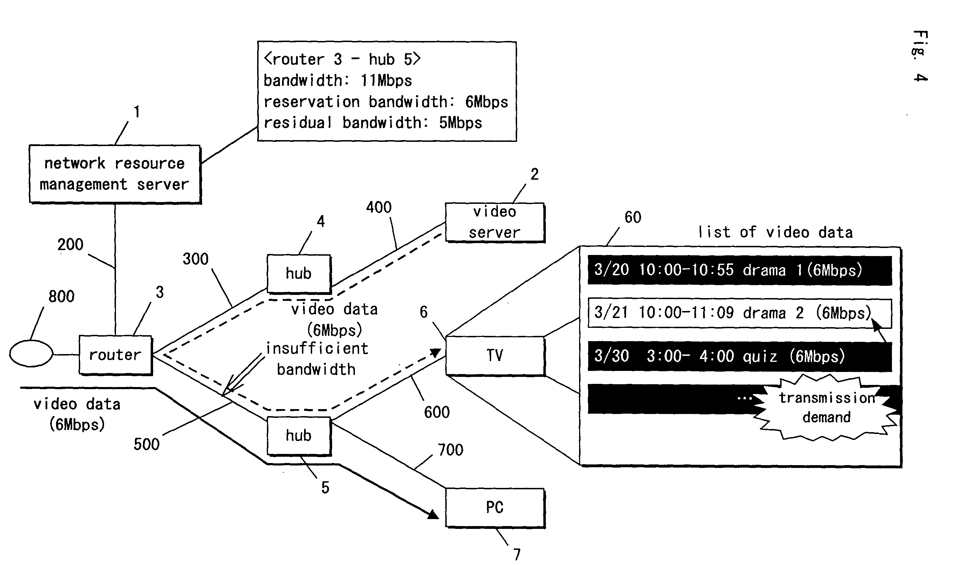

Fig. 4 shows a state where a television can not receive a service of quality that the television has requested.
Fig. 5 shows a state where a television can not receive a service of quality that the television 6 has requested.

From Fig. 2 to Fig. 5, the part, which is as same as Fig. 1, is coded in the same manner.

As shown in Fig. 2, when the television 6 displays the video server 2 in order to receive service-providing, the video server 2 transmits a video data list 60 to the television 6. Then, the television 6 displays the video data list 60 on a screen.

At this time, it is supposed that the PC 7 has already accessed the video server (not shown) connected to the network 800, and has already received the video data of 6Mbps coded by MPEG 2, as shown in Fig. 3.

Under the situation, as shown in Fig. 2, it is supposed that a user has chosen a program, which he/she wants to watch, in the video data list 60 displayed on the television 6, and a sending request to the video server 2 is made.

In the case, it is supposed that a user has chosen the high-quality video program requires a bandwidth of 6Mbps coded by MPEG 2.

The video data list 60 is displayed on the television 6 as GUI (Graphical User Interface).

The video server 2 receives such a request sent from the television 6, and confirms whether or not video data can be transmitted by 6Mbps to the television 6 to the network resource management server 1.

Specifically, the video server 2 transmits information showing transmission destination (the television 6) of video data and information showing bandwidth (6Mbps) required in order to transmit video data to the network resource management server 1.

Thus, the video server 2 confirms whether or not the transmission bandwidth of 6Mbps can be reserved in a path between the video server 2 and the television 6 to the network resource management server 1.

The network resource management server 1 confirms the use state of the bandwidth in the path between the video server 2 and the television 6 based on the information received from the video server 2.

The "use state" of a bandwidth contains both cases of when the bandwidth is actually used, and when the reservation is done, although the bandwidth is not actually used.

As shown in Fig. 3, in the link 500 between the router 3 and a hub 15, the PC 7 has already used the bandwidth of 6Mbps.

Therefore, the available bandwidth in the link 500 between the router 3 and the hub 15 is 5Mbps.

As shown in Fig. 4, since the bandwidth is insufficient between the video server 2 and the television 6, the video data of 6Mbps can not be transmitted.

From the decision, the network resource management server 1 returns a response that concerned service-providing is impossible to the video server 2.

In the case, the network resource management server 1 notifies the video server 2 of the residual resource information (information that the remaining bandwidth in the link 500 is 5Mbps) and so on.

The video server 2, which has received the notice, lowers the quality of video data based on residual resource information, and tries to enable to transmit within a residual resource.

That is, the video server 2 confirms whether or not the video data of the standard-quality image requires the bandwidth of 3Mbps coded by MPEG 2 is possible to be transmitted to the television 6 to the network resource management server 1.

Specifically, the video server 2 transmits both of the information showing the transmission destination (the television 6) of the video data, and the information showing bandwidth (3Mbps) required in order to transmit video data to the network resource management server 1.

Thus, the video server 2 confirms whether or not the transmission bandwidth of 3Mbps can be reserved in a path between the video server 2 and the television 6 to the network resource management server 1.

The network resource management server 1 confirms a use state of the bandwidth in the path between the video server 2 and the television 6, based on the information received from the video server 2.

As shown in Fig. 4, since a remaining bandwidth in the link 500 between the router 3 and the hub is 5Mbps, the bandwidth that the video server 2 requires is reservable. The network resource management server 1 returns a response that a concerned service-providing is possible to the video server 2.

The video server 2, which has received the response of service-providing being possible, presents an alternative 61 to the television 6, as shown in Fig. 5.

When a user approves the alternative 61, the video server 2 starts a transmission of standard-quality video data.

In addition, the alternative 61 is displayed on the television 6 as GUI.

Moreover, the technology of transmission by transforming to 3Mbps from 6Mbps is shown in published Japanese Patent Application Laid-Open No. 2000-31964

Communication procedures in the above mentioned example between the network resource management server 1, the video server 2, and the television 6 are explained below.

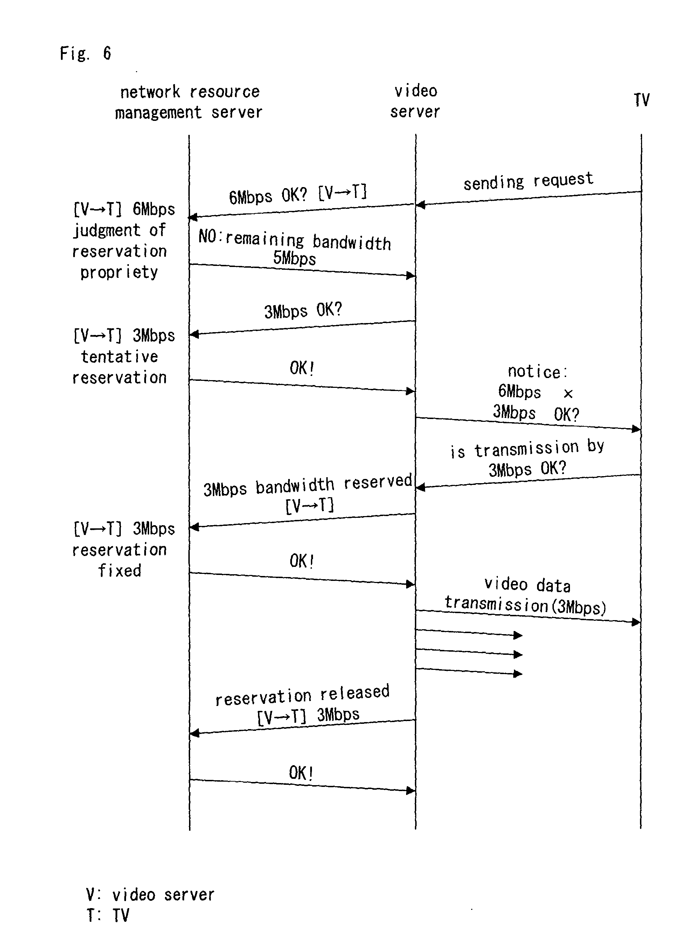

Fig. 6 shows an illustrative communication procedure according to Embodiment 1 of the present invention. The communication procedure is for between the network resource management server 1, the video server 2, and the television 6.

As shown in Fig. 6, the television 6 first performs a sending request of the high-quality video data that requires the bandwidth of 6Mbps, which is specified in the video data list 60 to the video server 2.

The video server 2, which has received the sending request, confirms whether or not the bandwidth of 6Mbps can be reserved between the video server 2 and the television 6 to the network resource management server 1.

Then, the network resource management server 1 judges whether or not the concerned bandwidth can be reserved.

As a result of the judgment (referring to Fig. 3), since the bandwidth of 6Mbps is not reservable, the network resource management server 1 notifies and transmits the information that the remaining bandwidth in the link 500 is 5Mbps to the video server 2.

The video server 2, which has received the notice, confirms whether or not the bandwidth of 3Mbps can be reserved between the video server 2 and the television 6 to the network resource management server 1, so that the video server 2 can try to provide the standard-quality video data, which requires the bandwidth of 3Mbps.

The network resource management server 1 judges whether or not the concerned bandwidth can be reserved.

Since the bandwidth of 3Mbps is reservable as a result of the judgment, the network resource management server 1 makes a tentative reservation while the network resource management server 1 notifies that the bandwidth of 3Mbps is reservable to the video server 2.

The video server 2, which has received the notice, is not able to transmit high-quality video data by 6 Mbps, but is able to transmit the alternative 61 that is operable to transmit standard-quality video data by 3Mbps to the television 6.

With a direction of a user approving the alternative 61, the television 6 notifies the video server 2 that it is sufficient to transmit the standard-quality video data.

The video server 2, which has received the notice, reserves the bandwidth of 3Mbps between the video server 2 and the television 6 to the network resource management server 1.

Then, the network resource management server 1 fixes the reservation (it is an actual reservation), and notifies the video server 2 that the reservation is fixed.

The video server 2, which has received the notice, transmits the standard-quality video data by 3Mbps to television 6.

When the video server 2 completes the transmission of video data, the video server 2 notifies the network resource management server 1 that the reservation of the bandwidth of 3Mbps between the video server 2 and the television 6 is released.

After the network resource management server 1, which has received the notice, the network resource management server 1 releases the reservation, and notifies the video server 2 that the concerned reservation has been released.

The details of the video server 2 in Fig. 1 are explained next.

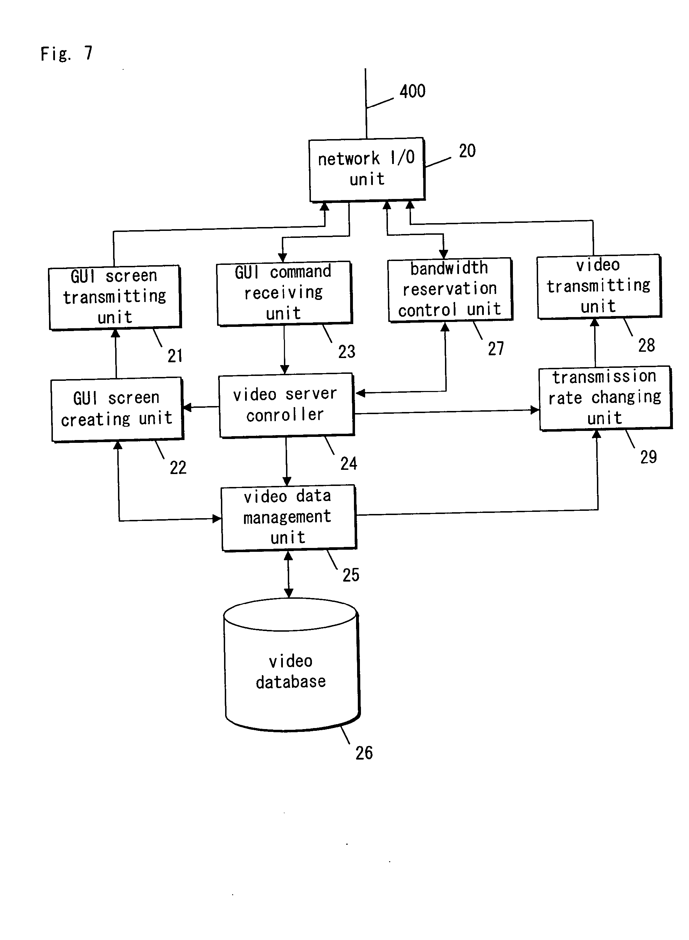

Fig. 7 is a block diagram of the video server 2 in Fig. 1. In addition, in Fig. 7, the part, which is as same as Fig. 1, is coded in the same manner.

As shown in Fig. 7, the video server 2 comprises a network I/O unit 20, a GUI screen transmitting unit 21, a GUI screen creating unit 22, a GUI command receiving unit 23, a video server controller 24, a video data management unit 25, a video database 26, a bandwidth reservation control unit 27, a video transmitting unit 28, and a transmitting rate changing unit 29.

The video server controller 24 controls each composition shown in Fig. 7. The video database 26 stores various video data.

The video data management unit 25 follows an instruction of the video server controller 24, acquires the information of the video program concerned as reproducible (service-providing is possible) video data based on the information stored in the video database 26, and outputs the information on the video program to the GUI screen creating unit 22.

The video data management unit 25 follows the instruction of the video server controller 24, acquires video data from the video database 26, and outputs the video data to the transmitting rate changing unit 29 or the video transmitting unit 28.

The GUI screen creating unit 22 follows an instruction of the video server controller 24, and then creates the video data list as GUI, and command (reproduction, stop, etc.) GUI based on the information of a video program inputted from the video data management unit 25.

The GUI screen transmitting unit 21 follows the instruction of the video server controller 24, transmits the GUI screen information that the GUI screen creating unit 22 created to the television 6 or the PC 7 connected to a home network 100 via the network I/O unit 20.

The GUI command receiving unit 23 receives a command (for example, sending request of video data) transmitted from the television 6 or the PC 7 connected to the home network 100 via the network I/O unit 20, and gives the information a to the video server controller 24.

The bandwidth reservation control unit 27 follows the instruction of he video server controller 24, and reserves a necessary bandwidth in order to transmit video data

When service is started with lowered image quality, the transmitting rate changing unit 29 follows the instruction of the video server controller 24, and changes a transmission rate.

The video transmitting unit 28 follows an instruction of the video server controller 24, and then transmits video data via the network I/O unit 20.

The details of the network resource management server 1 in Fig. 1 are explained next.

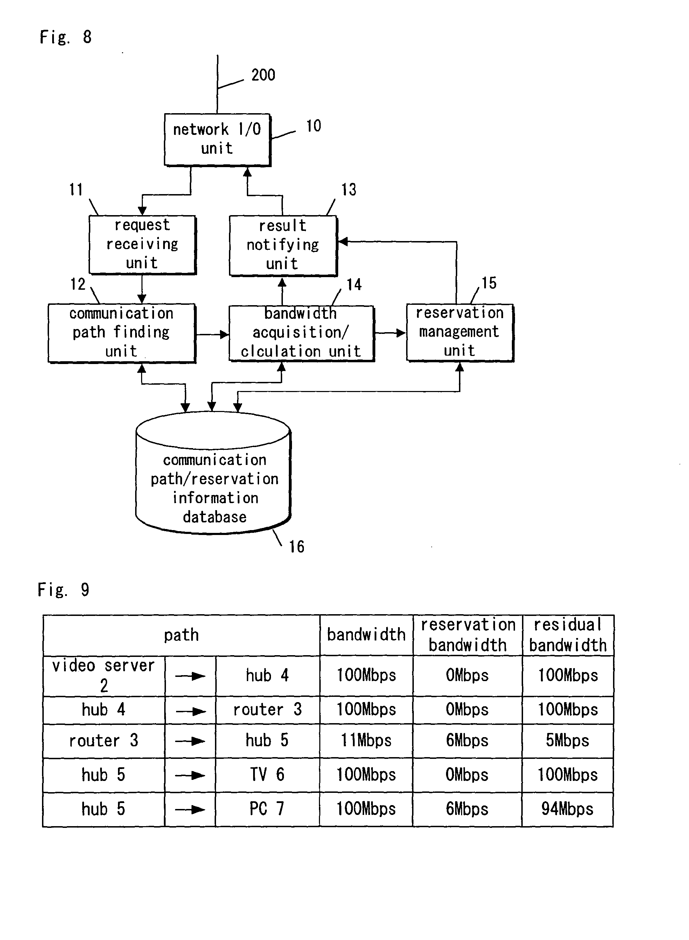

Fig. 8 is a block diagram of a network resource management server shown in Fig. 1. In Fig. 8, the part, which is as same as Fig. 1, is coded in the same manner.

As shown in Fig. 8, the network resource management server 1 comprises a network I/O unit 10, a request receiving unit 11, a communication path finding unit 12, a result notifying unit 13, a bandwidth acquisition/calculation unit 14, a reservation management unit 15, and a communication path/reservation information database 16.

The communication path/reservation information database 16 stores a relevant table to the use state of the bandwidth of the communication path in the home network 100 and the communication path.

Fig. 9 is an exemplified table stored in a communication path/reservation information database shown in Fig. 8.

Fig. 9 illustrates the table in case the use state of the bandwidth in the home network 100 is in the situation shown in Fig. 3.

It is returned to the explanation of Fig. 8 again.

The request receiving unit 11 receives a request (demand) of a bandwidth reservation, a bandwidth reservation release, or a bandwidth reservation change etc. from the video server 2 connected to the home network 100 via the network I/O unit 10.

The communication path finding unit 12 finds a path performing a bandwidth reservation, referring to the communication path/reservation information database 16 based on the information from the request receiving unit 11.

The bandwidth acquisition/calculation unit 14 acquires the information of a residual bandwidth in the path found by the communication path finding unit 12 from the communication path/reservation information database 16.

The bandwidth acquisition/calculation unit 14 calculates the residual bandwidth of the communication path in the home network 100.

The reservation management unit 15 performs processing of a tentative reservation, the reservation release, the reservation change, and the actual reservation of a bandwidth. Specifically, the reservation management unit 15 updates the table of the residual bandwidth, the communication path/reservation information database 16 based on the information of the residual bandwidth calculated by the bandwidth acquisition/calculation unit 14.

The result notifying unit 13 notifies the video server 2 of the information regarding the judgment result of reservation availability and the residual bandwidth in the path performing a bandwidth reservation via the network I/O unit 10.

The result notifying unit 13 receives a result of processing by the reservation management unit 15, and notifies the video server 2 of the result via the network I/O unit 10.

Operations of each composition in Fig. 7 and Fig. 8 are explained by taking the case where the procedures shown in Fig. 2 from Fig. 6 is carried out as an example.

First, the television 6 performs service-providing request to the video server 2. Then, the GUI command receiving unit 23 of Fig. 7 receives the concerned request via the network I/O unit 20.

The GUI command receiving unit 23 notifies the video server controller 24 of the request from the television 6.

Upon receiving the notice, the video server controller 24 gives an instruction of acquiring information of a video program related to reproducible video data to the data management unit 25.

After receiving the instruction, the video data management unit 25 refers to the video database, acquires information of the video program, and transfers the information to the GUI screen creating unit 22.

The GUI screen creating unit 22 creates the video data list 60 as GUI based on the information from the video data management unit 25.

The GUI screen transmitting unit 21 transmits the video data list 60 that the GUI screen creating unit 22 created to the television 6 via the network I/O unit 20.

Then, the video data list 60 as GUI is displayed on the television 6. It is supposed that a user operates GUI displayed on the television 6, and requests transmission of high-quality video data, which requires the bandwidth of 6Mbps.

The GUI command receiving unit 23 receives the request via the network I/O unit 20, and gives the information to the video server controller 24.

Based on the information, the video server controller 24 gives an instruction of reserving the bandwidth of 6Mbps between the video server 2 and the television 6 to the bandwidth reservation control unit 27.

The bandwidth reservation control unit 27 receives the instruction, and tries to reserve the bandwidth of 6Mbps to the network resource management server 1 via the network I/O unit 20.

The request receiving unit 11 of Fig. 8 receives the concerned reservation from the video server 2 via the network I/O unit 10, and gives the information that the concerned reservation is regarding the path between the video server 2 and the television 6.

The communication path finding unit 12, which received the information, finds the path between the video server 2 and the television 6 referring to the communication path/reservation information database 16.

In short, the communication path finding unit 12 indicates that the path between the video server 2 and the television 6 is composed of the video server 2, the link 400, the hub 4, the link 300, the router 3, the link 500, the hub 5, the link 600, and the television 6.

The bandwidth acquisition/calculation unit 14 refers to the communication path/reservation information database 16, and acquires the information of the residual bandwidth for the path that the communication path finding unit 12 has found.

The result notifying unit 13 of a result notifies the video server 2 via the network I/O unit 10 that the residual bandwidths of the link 500 is 5Mbps, and that the transmission of the video data of 6Mbps is impossible.

The GUI command receiving unit 23 which has received the notice via the network I/O unit 20 of Fig. 7, gives the contents of the concerned notice to the video server controller 24.

The video server controller 24 which has received the notice gives an instruction to the bandwidth reservation control unit 27 so that tentative reservation of the bandwidth of 3Mbps may be carried out between the video server 2 and the television 6.

The bandwidth reservation control unit 27 which has received the instruction tries the tentative reservation of the bandwidth of 3Mbps to the network resource management server 1 via the network I/O unit 20.

The request receiving unit 11 of Fig. 8 gives information that the concerned tentative reservation is regarding the path between the video server 2 and the television 6, to the communication path finding unit 12 in response to the concerned tentative reservation from the video server 2 via the network I/O unit 10.

The communication path finding unit 12 which has received the information finds the path between the video server 2 and the television 6 with reference to the communication path/reservation information database 16.

The bandwidth acquisition/calculation unit 14 acquires information on the residual bandwidth of a path which the communication path finding unit 12 found with reference to the communication path/reservation information database 16. Since in the link 500 the bandwidth of 6Mbps is already used, the information that the residual bandwidth of the link 500 is 5Mbps is acquired.

Since the residual bandwidths of the link 500 are 5Mbps, the reservation management department 15 updates the communication path/reservation information database 16, and performs the tentative reservation of the bandwidth of 3Mbps in the path between the video server 2 and the television 6.

The result notifying unit 13 notifies the video server 2 via the network I/O unit 10 that the tentative reservation of the bandwidth of 3Mbps is carried out.

The GUI command receiving unit 23 which has received the notice via the network I/O unit 20 of Fig. 7 notifies the video server controller 24 that the tentative reservation of the bandwidth of 3Mbps has been completed.

The video server controller 24 gives an instruction to the GUI screen creating unit 22 so that the alternatives 61 as GUI may be created.

The GUI screen creating unit 22 which has received an instruction creates the alternatives 61.

The GUI screen transmitting unit 21 transmits the alternatives 61 to the television 6 via the network I/O unit 20.

Then, the alternatives 61 are displayed on the television 6. The television 6 which has received the instruction of a user who approved the alternatives 61 notifies the video server 2 that the transmission with 3Mbps of the video data of standard image quality is sufficient.

The GUI command receiving unit 23 which has received the notice via the network I/O unit 20 of Fig. 7 notifies the video server controller 24 that the alternatives 61 is approved.

The video server controller 24 gives an instruction to the bandwidth reservation control unit 27 so that the actual reservation of the bandwidth of 3Mbps may be made.

The bandwidth reservation control unit 27 which has received the instruction performs the actual reservation of the bandwidth of 3Mbps to the network resource management server 1 via the network I/O unit 20.

The request receiving unit 11 of Fig. 8 receives the notice of the concerned reservation from the video server 2 and notifies the reservation management department 15 of release of the reservation via the network I/O unit 10.

The reservation management department 15 which has received the notice determines reservation of the bandwidth of 3Mbps between the video server 2 and the television 6. The reservation management department 15 notifies the result notifying unit 13 that the reservation has been determined.

The result notifying unit 13 which receives the notice notifies the video server 2 via the network I/O unit 10 that the bandwidth of 3Mbps has been reserved.

The GUI command receiving unit 23 which has received the notice notifies the video server controller 24 via the network I/O unit 20 of Fig. 7 that the reservation of the bandwidth of 3Mbps has been determined.

The video server controller 24 gives an instruction to the transmitting rate changing unit 29 to change a transmission rate from 6Mbps to 3Mbps.

The transmitting rate changing unit 29 receives the instruction and gives re-encoding to the video data acquired from the video database 26 so that the video data can be transmitted at the transmission rate of 3Mbps.

The video transmitting unit 28 transmits the re-encoded video data to the television 6 via the network I/O unit 10 at the transmission rate of 3Mbps.

When transmission of the video data is completed, the video server controller 24 gives an instruction to the bandwidth reservation control unit 27 to release the reservation of the bandwidth.

The bandwidth reservation control unit 27 which has received the instruction requests the release of the reservation to the network resource management server 1 via the network I/O unit 20.

The request receiving unit 11 of Fig. 8 receives the concerned request from the video server 2 and notifies the reservation management department 15 of Fig.8 via the network I/O unit 10.

The reservation management department 15 which has received the notice updates a table of the communication path/reservation information database 16, and releases the reservation of the bandwidth of 3Mbps between the video server 2 and the television 6. The reservation management department 15 notifies the result notifying unit 13 that the reservation has been released.

The result notifying unit 13 which has received the notice notifies the video server 2 via the network I/O unit 10 that the reservation of the bandwidth of 3Mbps has been released.

Now, the home network system 100 in the first modification of Embodiment 1 is explained below.

In the first modification, when a service providing with the requested quality is impossible, the video service 2 provides lowered quality of service without providing an alternatives to a service receiving apparatus (for example, the television 6) that is connected to the home network system 100. For example, the provided quality can be displayed somewhere on a screen. When the quality of 6Mbps is required and service is provided with the quality of 3Mbps, "3Mbps" may be displayed.

Hereafter, the first modification is explained with examples. In this case, the examples shown in Fig. 2 to Fig. 4 are given.

As shown in Fig. 2, when the television 6 performs a sending request of high-quality video data which needs the bandwidth of 6Mbps to the video server 2, is a case.

As shown in Fig. 3, when the sending request is performed, the PC 7 has already used the bandwidth of 6Mbps in the link 500, is another case.

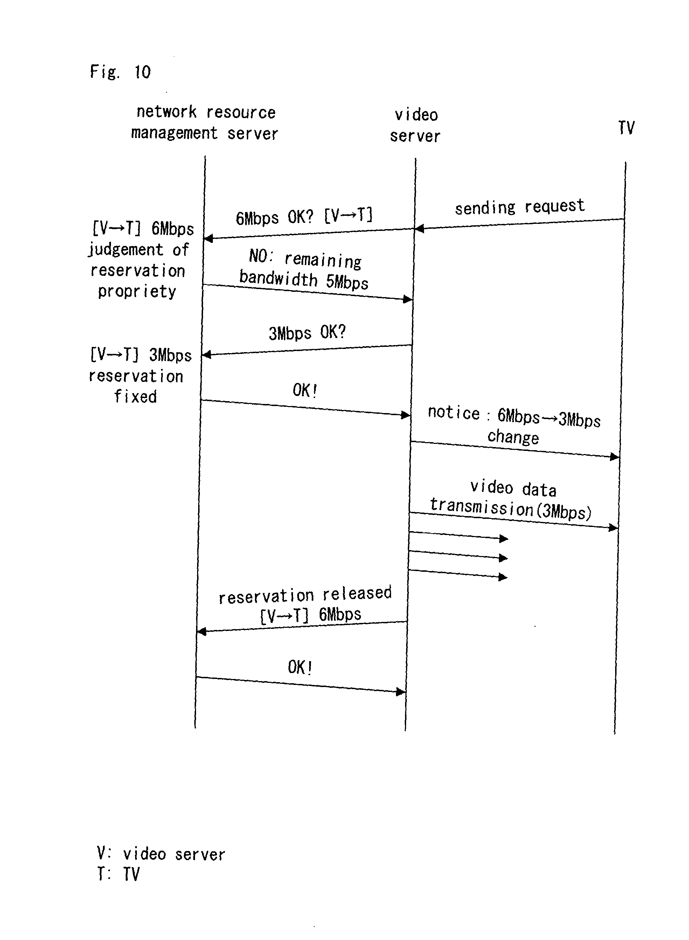

Fig. 10 is a figure illustrating in the first modification of the communication procedure between the network resource management server 1, the video server 2, and the television 6.

As shown in Fig. 10, the television 6 performs the sending request (sending request) of the high-quality video data which needs the bandwidth of 6Mbps specified in the video data list 60 to the video server 2.

The video server 2 confirms whether the bandwidth of 6Mbps can be reserved between the video server 2 and the television 6 to the network resource management server 1.

Then, the network resource management server 1 judges the reservation availability of the concerned bandwidth.

Since the bandwidth of 6Mbps is not reservable as a result of the judging, the network resource management server 1 transmits information that remaining bandwidths in the link 500 are 5Mbps while notifying that the bandwidth of 6 Mbps is not reserved to the video server 2.

The video server 2 confirms whether the bandwidth of 3Mbps can be reserved between the video server 2 and the television 6 to the network resource management server 1 for trying to provide the standard-quality video data which needs the bandwidth of 3Mbps.

Then, the network resource management server 1 judges the reservation availability of the concerned bandwidth.

As a result of judging, since the bandwidth of 3Mbps is reservable, the network resource management server 1 determines the reservation while notifying that the bandwidth of 3Mbps is reservable to the video server 2.

The video server 2 notifies the television 6 that transmission of the high-quality video data in 6Mbps is impossible but the transmission of the standard-quality video data in 3Mbps is possible.

The video server 2 transmits the standard-quality video data in 3Mbps to the television 6.

The video server 2 notifies that the reservation of the bandwidth of 3Mbps between the video server 2 and the television 6 is released, when the transmission of the video data has completed.

The network resource management server 1 releases the concerned reservation, and notifies the release of the reservation to the video server 2.

As an example, a case where the procedure shown in Figs. 2 to 4 and Fig. 10 is performed, operations in the first modification of each composition of Figs. 7 and 8 is explained.

Operations from which the television 6 performs the service providing request to the video server 2 until the network resource management server 1 notifies that remaining available bandwidths of the link 500 are 5Mbps to the video server 2, is the same as that of the above-mentioned Embodiment 1, and omits an explanation.

The GUI command receiving unit 23 has received the notice that the residual bandwidths of the link 500 is 5Mbps, and that cannot transmit video data of 6Mbps, via the network I/O unit 20 of Fig. 7 from the network resource management server 1, gives contents of the concerned notice to the video server controller 24.

The video server controller 24 gives an instruction to the bandwidth reservation control unit 27, so that the bandwidth of 3Mbps should be reserved between the video server 2 and the television 6.

The bandwidth reservation control unit 27 which has received the instruction tries to reserves the bandwidth of 3Mbps to the network resource management server 1 via the network I/O unit 20.

The request receiving unit 11 of Fig. 8, which receives the concerned reservation from the video server 2 via the network I/O unit 10, gives information that the concerned reservation is regarding a path between the video server 2 and the television 6, to the communication path finding unit 12.

The communication path finding unit 12 which has received the information derives the path between the video server 2 and the television 6 with reference to the communication path/reservation information database 16.

The bandwidth acquisition/calculation unit 14 acquires information on a residual bandwidth of the path which the communication path finding unit 12 derived with reference to the communication path/reservation information database 16.

In the link 500, since the bandwidth of 6Mbps is already used, the residual bandwidth of the link 500 acquires information on which the residual bandwidth is 5Mbps.

Since the residual bandwidths of the link 500 is 5Mbps, the reservation management department 15 updates the communication path/reservation information database 16, and reserves the bandwidth of 3Mbps in the path between the video server 2 and the television 6.

The result notifying unit 13 notifies that the bandwidth of 3Mbps is reserved to the video server 2 via the network I/O unit 10.

The GUI command receiving unit 23 notifies that the reservation of the bandwidth of 3Mbps has been completed to the video server controller 24 via the network I/O unit 10.

The video server controller 24 gives an instruction to the transmitting rate changing unit 29 to change a transmission rate from 6Mbps to 3Mbps.

The transmitting rate changing unit 29 gives re-encoding to the video data acquired from the video database 26 so that the video data can be transmitted at the transmission rate of 3Mbps.

After the video transmitting unit 28 notifies that the standard-quality video data is transmitted to the television 6, the video transmitting unit 28 transmits the re-encoded video data to television 6 at the transmission rate of 3Mbps via the network I/O unit 10.

The operation after transmission of the video data is completed is the same as that of the above-mentioned Embodiment 1, and omits the explanation of it.

Now, the second modification of Embodiment 1 is explained below.

The home network system 100 in the second modification comprises both the function of the home network system 100 of Embodiment 1, and the function of the home network system 100 of the first modification of Embodiment 1.

In the second modification, a user can change and use both the function (in the case that alternatives is shown when a service quality which a user demands cannot be provided, the function to provide the service which is made lowered by the alternatives when there is the approval of a user) of the home network system 100 of Embodiment 1, and the function (function to provide the service which is made lowered without showing the alternatives when the service quality which a user demands cannot be provided) of the home network system 100 of the first modification of Embodiment 1.

According to the second modification, a user's convenience can be improved.

The video server 2 of Fig. 1 is an example of service-providing apparatus that provides services for service-receiving apparatus, and it is the composition of the home network 100, is not limited to the video server 2. The point is as same as Embodiment 2 and its modification, and Embodiment 3 mentioned later.

Other service-providing apparatus, such as providing music, can also be arranged in the home network 100 of Fig. 1. The point is as same as Embodiment 2 and its modification, and Embodiment 3 mentioned later.

Moreover, some of different service-providing apparatus can also be arranged in the home network 100 of Fig. 1. The point is as same as Embodiment 2 and its modification, and Embodiment 3 mentioned later.

The video data list is mentioned as the example as a list of services that is prepared for providing from the video server 2.

However, it is needless to say that a content of the list of services, which is prepared for providing, varies from kinds of service-providing apparatus. The point is as same as Embodiment 2 and its modification, and Embodiment 3 mentioned later.

In Fig. 1, although the television 6 and the PC 7 are mentioned as an example of the service-receiving apparatus that receives service-providing, service-receiving apparatus is not limited to this. The point is as same as Embodiment 2 and its modification, and Embodiment 3 mentioned later.

Moreover, the number of service-receiving apparatuses in the home network 100 of Fig. 1 may be singular or plural. The point is as same as Embodiment 2 and its modification, and Embodiment 3 mentioned later.

The links from 200 to 700 of the home network 100 of Fig. 1 may be wireless, a cable, or a combination of these. The point is as same as Embodiment 2 and its modification, and Embodiment 3 mentioned later.

The network resource management server 1 and the service-providing apparatus, such as video server 2, may be formed as one. The point is as same as Embodiment 2 and its modification, and Embodiment 3 mentioned later.

The composition of the home network 100 of Fig. 1 is not limited to the case above, but the home network 100 needs to be composed of the network resource management server 1, the service-providing apparatus, and a service receiver. The point is as same as Embodiment 2 and its modification, and Embodiment 3 mentioned later.

Although high-quality service and average-quality service has been prepared as two steps of services, it is not limited to such case here, a step of quality can be chosen based on a state of the use situation of bandwidth by preparing service of three or more steps of quality. The point is as same as Embodiment 2 and its modification, and Embodiment 3 mentioned later.

Although the home network 100 is considered as network prepared at home in the above example, it is not limited to this. The point is as same as Embodiment 2 and its modification, and Embodiment 3 mentioned later.

As mentioned above, in Embodiment 1, the first modification, and the second modification, when a network resource (for example, bandwidth) required for the service the user requests is not reserved, lowered quality service is provided.

By the requirement, even when service of the quality which a user demands cannot be offered, the service which made the quality low within the limits of a reservable network resource is offered. Even when a user can not receive the quality of service that he/she requests, lowered quality service is provided within reservable network resources.

Even though the quality of service is lower than the quality the user requests, at least he/she can receive service-providing when he/she wants. Therefore, users' dissatisfaction can be reduced comparing to the case where they do not receive anything. In Embodiment 1, the first modification, Embodiment 2, and the second modification, the situation, where the available remaining bandwidths are not used at all, is avoided as much as possible; therefore, the effective use of a bandwidth is available.

### (Embodiment 2)

The whole composition of a home network system according to Embodiment 2 of the present invention is the same as that of the home network system 100, as shown in Fig. 1 according to Embodiment 1.

Therefore, in explaining Embodiment 2, the home network system 100 shown in Fig. 1 is regarded as a home network system according to Embodiment 2.

A video server according to Embodiment 2 has the same composition as the video server shown in Fig. 7. Therefore, the video server shown in Fig. 7 is regarded as a video server according to Embodiment 2.

A network resource management server according to Embodiment 2 has the same composition as the network resource management server shown in Fig. 8. Therefore, the network resource management server shown in Fig. 8 is regarded as a network resource management server according to Embodiment 2.

Embodiment 2 is now explained, referring to a concrete example. A bandwidth will be discussed as one of exemplified items of network resources. Moreover, the examples shown in Fig. 2 through Fig. 5 will be discussed.

As shown in Fig. 2, it is assumed that the television 6 requests the video server 2 to send a high quality video data that needs a bandwidth of 6Mbps. It is further assumed that a PC 7 is already using a bandwidth of 6Mbps in a link 500 when the request is made, as shown in Fig. 3.

Under this circumstance, as shown in Fig. 4, the video server 2 cannot provide the high quality video data that the television 6 requires. Therefore, as shown in Fig. 5, the video server 2 shows the television 6 alternatives 61.

After issuing a notice of approval for the alternative 61, the television 6 receives a video data of standard image quality at 3Mbps, provided by the alternatives 61.

A communication procedure so far is the same as the communication procedure according to Embodiment 1, as shown in Fig. 6. A subsequent communication procedure will be explained in the following.

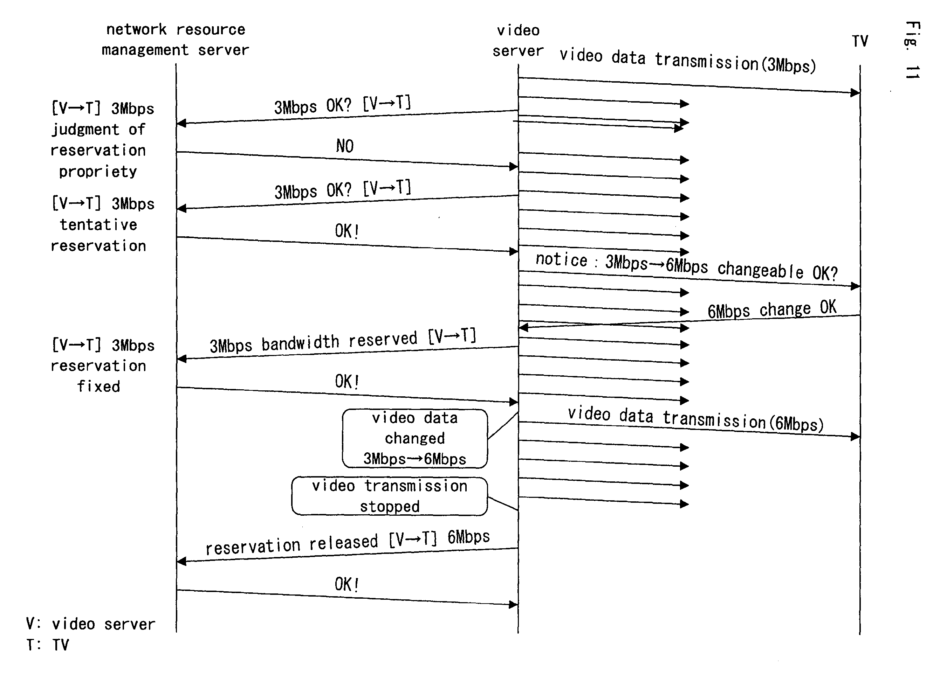

Fig. 11 shows an illustrative communication procedure between the network resource management server 1, the video server 2, and the television 6, according to Embodiment 2 of the present invention.

As shown in Fig. 11, based on the alternatives 61, the video server 2 is transmitting the video data of the standard image quality at 3Mbps to the television 6, which issued a notice of approval for the alternative 61.

While the video server 2 is, based on the alternatives 61, transmitting the video data of standard image quality by 3Mbps, the video server 2 requests periodically the network resource management server 1 to check whether another bandwidth of 3Mbps can be reserved between the video server 1 and the television 6. This is because securing a bandwidth of 6Mbps in total enables to transmit a video data of high image quality.

Then, the network resource management server 1 judges whether a reservation of the bandwidth of 6Mbps is possible.

When another bandwidth of 3Mbps cannot be reserved anymore as a result of the judgment, the network resource management server 1 notifies the judgment result to the video server 2.

Another bandwidth of 3Mbps is found to be reserved, on the other hand, the network resource management server 1 reserves tentatively another bandwidth of 3Mbps between the video server 2 and the television 6, and notifies the video server 2 of the tentative reservation of another bandwidth of 3Mbps.

Upon receiving the tentative reservation, the video server 2 informs the television 6 that a transmission of the high quality video data at 6Mbps becomes available.

With a direction of the user that asks for change to the high quality video data, the television 6 requests the video server 2 to change the transmission to the high quality video data.

Upon receiving the request, the video server 2 asks the network resource management server 1 to make a reservation for another bandwidth of 3Mbps between the video server 2 and the television 6.

Then, the network resource management server 1 ascertains the tentative reservation and makes a formal reservation, and notifies the fact to the video server 2.

The video server 2, after receiving this notice, transmits a high quality video data at 6Mbps to the television 6.

After the completion of the transmission of the high quality video data, the video server 2 notifies the network resource management server 1 that the reservation of a bandwidth of 6Mbps in total between the video server 2 and the television 6 is canceled.

After receiving the cancellation notice, the network resource management server 1 cancels the concerned reservation, and notifies the cancellation to the video server 2.

Now, according to the exemplified communication procedures as described above following Fig. 11, operations of the units shown in Fig. 7 and Fig. 8 are explained.

It is supposed that a video transmitting unit 28 of Fig.7 transmits, based on the alternatives 61, a video data of standard image quality at 3Mbps to the television 6, which issued a notice that the alternatives 61 are approved.

While transmitting the video data of standard image quality at 3Mbps based on the alternatives 61, a video server controller 24 directs periodically a bandwidth reservation control unit 27 to reserve another bandwidth of 3Mbps between the video server 2 and the television 6.

In response to the direction, the bandwidth reservation control unit 27 asks periodically the network resource management server 1 to make a reservation of the bandwidth of 3Mbps between the video server 2 and the television 6, while the video server 2 is transmitting the video data of standard image quality at 3Mbps based on the alternatives 61.

A request receiving section 11 of Fig. 8, after receiving the concerned reservation via a the network I/O unit 10, gives to a communication path finding unit 12 an information that the concerned reservation relates to a path between the video server 2 and the television 6.

Upon receiving the information, the communication path finding unit 12 finds a path between the video server 2 and the television 6 with reference to a communication path/reservation information database 16.

That is to say, the communication path finding unit 12 finds a path between the video server 2 and the television 6, passing through the video server 2, a link 400, a hub 4, a link 300, a router 3, a link 500, a hub 5, a link 600, and to the television 6.

The bandwidth acquisition/calculation unit 14 acquires information on the residual bandwidth of the path which the communication path finding unit 12 found, with reference to a communication path/reservation information database 16.

When it is found that a bandwidth of 3Mbps cannot be reserved, after receiving the information on the residual bandwidth of the path that the bandwidth acquisition/calculation unit 14 acquired, a result notifying unit 13 notifies the video server 2 through a network I/O unit 10 that a bandwidth of 3Mbps cannot be reserved.

When it is found that a bandwidth of 3Mbps can be reserved, after receiving the information on the residual bandwidth of the path that the bandwidth acquisition/calculation unit 14 acquired, the reservation management unit 15 updates the communication path/reservation information database 16. The reservation management unit 15 also makes a tentative reservation of the bandwidth of 3Mbps along the path between the video server 2 and the television 6.

The result notifying unit 13 informs the video server 2, through the network I/O unit 10, of the fact that the tentative reservation of the bandwidth of 3Mbps is made.

After receiving the tentative reservation notice through a network I/O unit 20 of Fig. 7, a GUI command receiving unit 23 gives the contents of the tentative reservation notice to a video server controller 24.

Then the video server controller 24 directs a GUI screen creating unit 22 to create a GUI screen information that includes a notice that a transmission of the high quality video data at 6Mbps becomes possible. The GUI screen creating unit 22 creates a GUI screen information.

A GUI screen transmitting unit 21 transmits the GUI screen information to the television 6 through the network I/O unit 20.

Then, this GUI screen information is displayed on the television 6. When a user operates GUI on the screen of the television 6 and demands change to a high quality video data. The television 6 requests the video server 2 to transmit the high quality video data at 6Mbps.

The GUI command receiving unit 23 receives this notice through the network I/O unit 20 of Fig. 7. The GUI command receiving unit 23 notifies a video server controller 24 of the fact that a change to high quality.

Then, the video server controller 24 directs a bandwidth reservation control unit 27 to make a formal reservation of a 3Mbps bandwidth.

The bandwidth reservation control unit 27 makes the formal reservation of the 3Mbps bandwidth to the network resource management server 1 through the network I/O unit 20.

A request receiving section 11 of Fig. 8 receives the notice of the formal reservation through the network I/O unit 10, and notifies the fact to a reservation management unit 15.

Upon receiving the notice, the reservation management unit 15 updates the table of a communication path/reservation information database 16 and ascertains the reservation of a 3Mbps bandwidth between the video server 2 and the television 6.

As a result, a bandwidth of 6Mbps is reserved between the television 6 and the video server 2.

The reservation management unit 15 notifies the result notifying unit 13 that the reservation is formally ascertained.

Receiving the notice, the result notifying unit 13 notifies the video server 2 through the network I/O unit 10 that a bandwidth of 3Mbps has been reserved.

In Fig .7, the GUI command receiving unit 23 receives the above notice through the network I/O unit 20, and notifies the video server controller 24 that the reservation is formally ascertained for a bandwidth of 3Mbps.

The video server controller 24 directs the video data management unit 25 to acquire a high quality video data from the video database 26 and send it to a video transmitting unit 28.

Then, the video transmitting unit 28 transmits the high quality video data to the television 6 through the network I/O unit 10 at the transmission rate of 6Mbps.

When the transmission of the high quality video data is completed, the video server controller 24 directs the bandwidth reservation control unit 27 to cancel the reservation of the bandwidth.

Upon receiving the direction, the bandwidth reservation control unit 27 requests a release of the reservation to the network resource management server 1, through the network I/O unit 20.

Receiving the concerned request from the video server 2 through the network I/O unit 10, the request receiving section 11 of Fig. 8 notifies the concerned request to the reservation management unit 15.

After receiving the notice, the reservation management unit 15 updates the table of the communication path/reservation information database 16, and cancels the reservation for the bandwidth of 6Mbps between the video server 2 and the television 6.

The reservation management unit 15 notifies the result notifying unit 13 that the reservation has been canceled.

Upon receiving the notice, the result notifying unit 13 notifies the video server 2 through the network I/O unit 10 that the reservation of the bandwidth of 6Mbps has been canceled.

Now, the home network system 100 according to the first modification of Embodiment 2 is explained.

According to the first modification, when a service of high quality becomes available while a service of standard quality is provided, the video server 2 provides a service receiver (for example, the television 6) with the service of high quality, switching from the service of standard quality without notifying the change of the quality.

Hereafter, the first modification is explained, referring to a concrete example.

Assume that the television 6 issues to the video server 2 a request to send a high quality video data that needs a bandwidth of 6Mbps as shown in Fig. 2, and further assume that, as shown in Fig. 3, a PC 7 is already using a bandwidth of 6Mbps in a link 500, when the above sending request is made.

In this case, as shown in Fig. 4, the video server 2 cannot provide the high quality video data that the television 6 requires.

For this reason, as shown in Fig. 5, the video server 2 indicates the television 6 alternatives 61.

The television 6, after issuing a notice of approval for the alternatives 61, receives a video data of standard image quality at 3Mbps, based on the alternatives 61.

The communication procedure so far is the same as the communication procedure shown in Fig. 6. A subsequent communication procedure is explained.

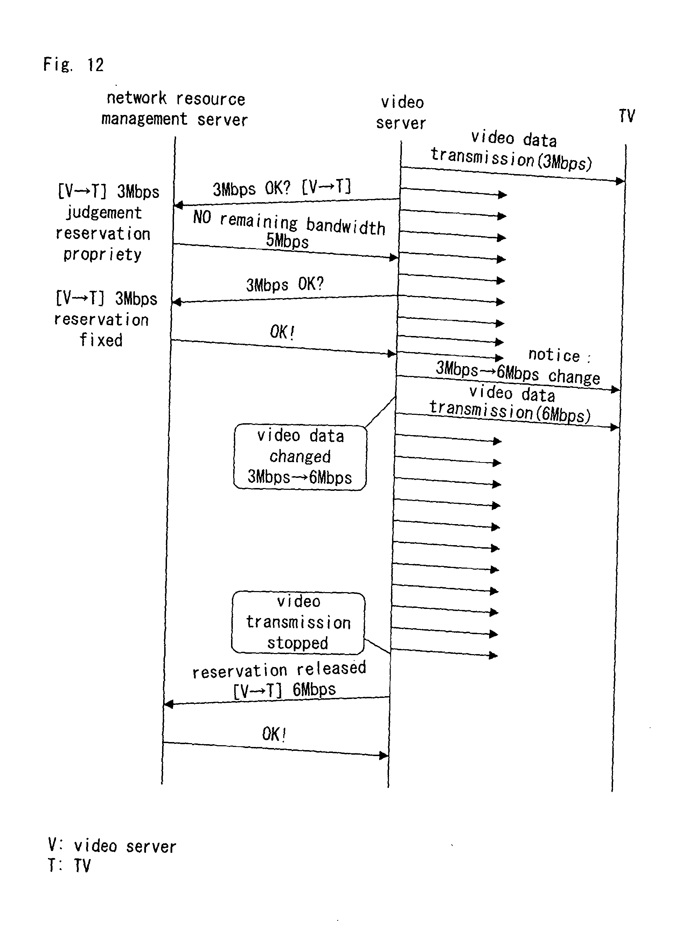

Fig. 12 shows an illustrative communication procedure according to the first modification for Embodiment 2 of the present invention.

As shown in Fig. 11, the video server 2 is, based on the alternatives 61, transmitting a video data of standard image quality at 3Mbps to the television 6 that has issued the notice of approval for the alternatives 61.

While the video server 2 transmits the video data of standard image quality at 3Mbps based on the alternatives 61, the video server 2 asks periodically the network resource management server 1 whether another bandwidth of 3Mbps can be reserved between the video server 2 and the television 6. This is because securing a bandwidth of 6Mbps in total enables to transmit a video data of high image quality.

Then, the network resource management server 1 judges if the concerned bandwidth is possible to reserve.

When a bandwidth of 3Mbps is found unavailable as a result of the judgment, the network resource management server 1 notifies the unavailability to the video server 2.

When a bandwidth of 3Mbps is found available, on the other hand, the network resource management server 1 decides a reservation of the bandwidth of 3Mbps between the video server 2 and the television 6, and informs the video server 2 of the decided reservation.

Upon receiving the reservation notice, the video server 2 sends a notice to the television 6 that the video server 2 transmits the high quality video data at 6Mbps. Then, the video server 2 transmits the high quality video data at 6Mbps to the television 6.

When the transmission of the video data is completed, the video server 2 issues a notice that the bandwidth reservation of 6Mbps in total between the video server 2 and the television 6 may be canceled.

Upon receiving the notice, the network resource management server 1 cancels the concerned reservation and notifies the video server 2 of the cancellation.

Now, according to the exemplified communication procedures as described above following Fig. 12, operations of the units shown in Fig. 7 and Fig. 8 are explained.

It is supposed that the video transmitting unit 28 of Fig. 7 transmits a video data of standard image quality at 3Mbps, based on the alternatives 61, to the television 6 that has issued the approval notice of the alternatives 61.

While transmitting the video data of standard image quality at 3Mbps based on the alternatives 61, a video server controller 24 directs periodically a bandwidth reservation control unit 27 to reserve another bandwidth of 3Mbps between the video server 2 and the television 6.

In response to the direction, the bandwidth reservation control unit 27 asks periodically the network resource management server 1 to make a reservation of the bandwidth of 3Mbps between the video server 2 and the television 6, while the video server 2 is transmitting the video data of standard image quality at 3Mbps based on the alternatives 61.

A request receiving section 11 of Fig. 8, after receiving the concerned reservation via a the network I/O unit 10, gives to a communication path finding unit 12 an information that the concerned reservation relates to a path between the video server 2 and the television 6.

Upon receiving the information, the communication path finding unit 12 finds a path between the video server 2 and the television 6 with reference to a communication path/reservation information database 16.

The bandwidth acquisition/calculation unit 14 acquires information on the residual bandwidth of the path which the communication path finding unit 12 found, with reference to a communication path/reservation information database 16.

When it is found that a bandwidth of 3Mbps cannot be reserved, after receiving the information on the residual bandwidth of the path that the bandwidth acquisition/calculation unit 14 acquired, a result notifying unit 13 notifies the video server 2 through a network I/O unit 10 that a bandwidth of 3Mbps cannot be reserved.

When it is found that a bandwidth of 3Mbps can be reserved, after receiving the information on the residual bandwidth of the path that the bandwidth acquisition/calculation unit 14 acquired, the reservation management unit 15 updates the communication path/reservation information database 16. The reservation management unit 15 also makes a tentative reservation of the bandwidth of 3Mbps along the path between the video server 2 and the television 6.

As a result, a bandwidth of 6Mbps in total is reserved between the television 6 and the video server 2.

The reservation management unit 15 notifies the result notifying unit 13 that the reservation is formally ascertained.

Receiving the notice, the result notifying unit 13 notifies the video server 2 through the network I/O unit 10 that a bandwidth of 3Mbps has been reserved.

In Fig .7, the GUI command receiving unit 23 receives the above notice through the network I/O unit 20, and notifies the video server controller 24 that the reservation is formally ascertained for a bandwidth of 3Mbps.

The video server controller 24 directs the video data management unit 25 to acquire a high quality video data from the video database 26 and send it to a video transmitting unit 28.

Then, the video transmitting unit 28 transmits the high quality video data to the television 6 through the network I/O unit 10 at the transmission rate of 6Mbps.

Operation after the transmission of the video data has completed is the same as that of the above-mentioned Embodiment 2, and related explanation is omitted.

Now, the second modification of Embodiment 2 is explained.

A home network system 100 according to the second modification possesses both of the function of the home network system 100 according to Embodiment 2 and the function of the home network system 100 according to the first modification of Embodiment 2.

According to the second modification, a user can use, by switching, either of the function of the home network system 100 according to Embodiment 2 and the function of the home network system 100 according to the first modification of Embodiment 2. The function of the home network system 100 according to Embodiment 2 includes a function that when a service of high quality becomes available while a service of standard quality is provided, the service of high quality is provided, with the user's approval after the availability notice of the service of high quality. On the other hand, the function of the home network system 100 according to the first modification of Embodiment 2 includes a function that when a service of high quality becomes available while a service of standard quality is provided, the service of high quality is provided, without the availability notice of the service of high quality.

According to the second modification, a user's convenience can be improved.

As mentioned above, according to Embodiment 2, the first modification and the second modification, when a network resource (for example, bandwidth) required for providing a service demanded by a user cannot be reserved, a service of lower quality than the demanded service is provided.

Consequently, even when a service of the quality that a user demands cannot be provided, a service of lower quality is provided within the limits of a reservable network resource.

Therefore, a user can receive a service at least when the user wants to receive a service, although the quality of the service is lower than the quality which the user demands. As compared with the case where a service is not provided at all, user's dissatisfaction can be released.

Moreover, according to Embodiment 2, the first modification and the second modification, when a network resource (for example, bandwidth) required for providing a service of higher quality than the currently provided service, a service of higher quality t is provided.

When a service of high quality that the user has demanded at the beginning becomes available, then, the service of high quality is provided. Therefore, user's degree of satisfaction can be raised.

Furthermore, according to Embodiment 2, the first modification and the second modification, a situation where the remaining bandwidths that can be then used are not used at all is avoided as much as possible, and the effective use of a bandwidth becomes possible.

In addition, as mentioned above, the procedure of Figs. 11 or 12 can be performed not only after the procedure of the completion of video data transmission shown in Fig. 6, but also after the procedure of the completion of video data transmission shown in Fig. 10.

### (Embodiment 3)

The whole composition of a home network system according to Embodiment 3 of the present invention is the same as that of the home network system 100, as shown in Fig. 1 according to Embodiment 1.

Therefore, in explaining Embodiment 3, the home network system 100 shown in Fig. 1 is regarded as a home network system according to Embodiment 3.

A network resource management server according to Embodiment 3 has the same composition as the network resource management server shown in Fig. 8. Therefore, the network resource management server shown in Fig. 8 is regarded as a network resource management server according to Embodiment 3.

Now, in the home network system 100 according to Embodiment 3, an availability situation of a network resource (for example, bandwidth) is checked. Based on the result of this check, all services to be provided are judged if they are possible to be provided, thus prohibiting a user from requesting to provide a service which cannot be provided.

Thereby, for a service which cannot be provided currently, a user cannot request to provide the service.

Consequently, the impression of the user of having expectation betrayed after requesting a service provision can be decreased as compared with the case where the request itself is refused.

That is, a user's dissatisfaction can be decreased.

Embodiment 3 is explained, referring to a concrete example. In this case, a bandwidth is mentioned as an example of a network resource.

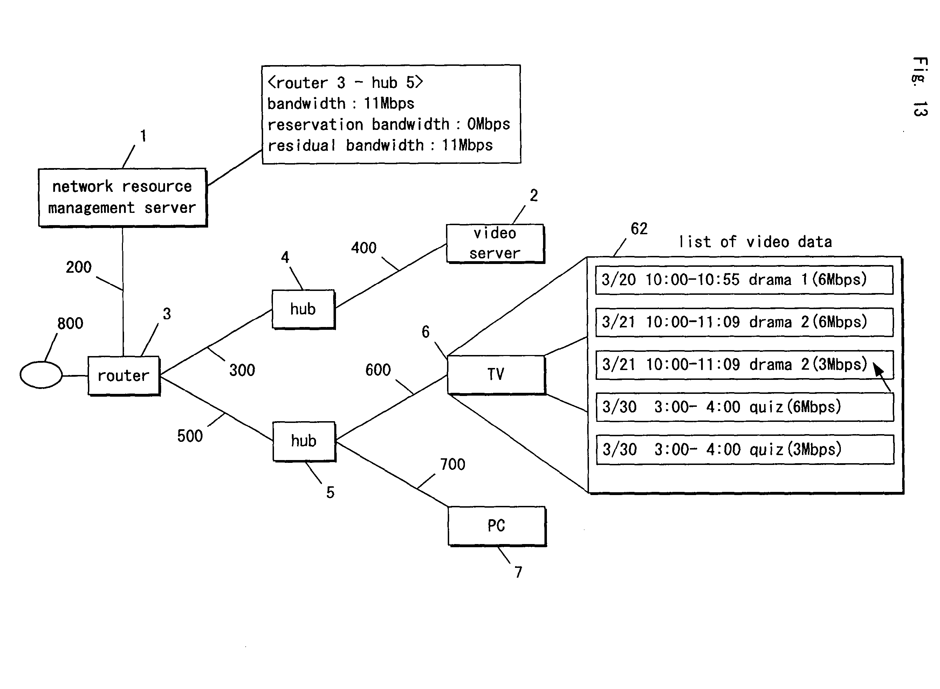

Fig. 13 shows a state where traffic is not flowing in the home network system 100 shown in Fig. 1. In Fig. 13, the same sign is attached for the same unit as in Fig. 1.

The video server 2 communicates with the network resource management server 1 periodically, and checks periodically a use state of the bandwidth in the path between the video server 2 and the television 6.

As shown in Fig. 13, since traffic is not flowing between the video server 2 and the television 6, the video server 2 can transmit any of the stored video data to the television 6

Therefore, the video server 2 creates a video data list 62 and transmits it to the television 6. With the video data list 62, a user can choose all video programs in the television 6.

In this way, the user of the television 6 can see all the videos which are stored in the video server 2.

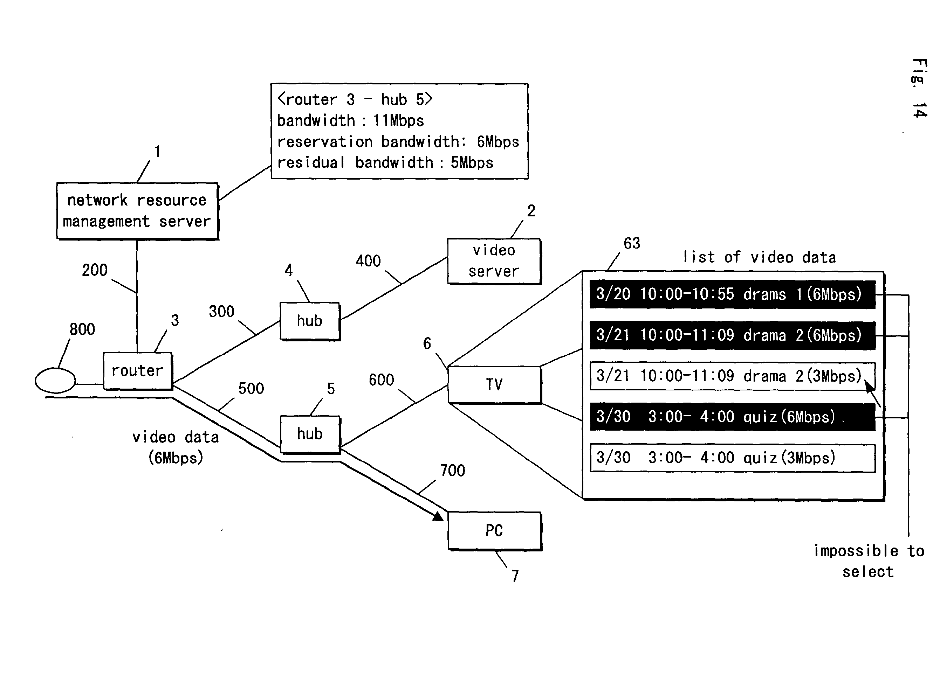

Fig. 14 shows the state a PC 7 of the home network system 100 of Fig. 1 receives video data from a network 800. In Fig. 14, the same sign is attached for the same unit as in Fig. 1.

The video server 2 communicates with the network resource management server 1 periodically, and checks periodically a use state of the bandwidth in the path between the video server 2 and the television 6.

As shown in Fig. 14, the PC 7 receives video data at 6Mbps from the network 800.

Therefore, the network resource management server 1 grasps that the remaining bandwidth of the link 500 which connect a router 3 and a hub 5 is 5Mbps in this case.

Since the video server 2 communicates with the network resource management server 1 periodically and checks periodically a use state of the bandwidth in the path between the video server 2 and the television 6, the video server 2 can know that the remaining bandwidth of the link 500 is 5Mbps.

Since the remaining bandwidth of the link 500 is 5Mbps, the video server 2 cannot provide, to the television 6, a video data which needs a bandwidth of 6Mbps.

Therefore, the video server 2 creates the video data list 63, and transmits it to the television 6 so that a user of the television 6 cannot choose the video program which needs a bandwidth of 6Mbps.

Specifically, in the video data list 63, a mask is covered over the display of the video program which needs a bandwidth of 6Mbps.

In the example of Fig. 14, a black mask is covered over the display of the video program which cannot be chosen.

Or, in the video data list 63, the video program which needs a bandwidth of 6Mbps may not be displayed.

Thereby, a user of the television 6 cannot choose nor see the video program which needs a bandwidth of 6Mbps.

Now, a processing flow for the video server 2 is explained, referring to a flow chart.

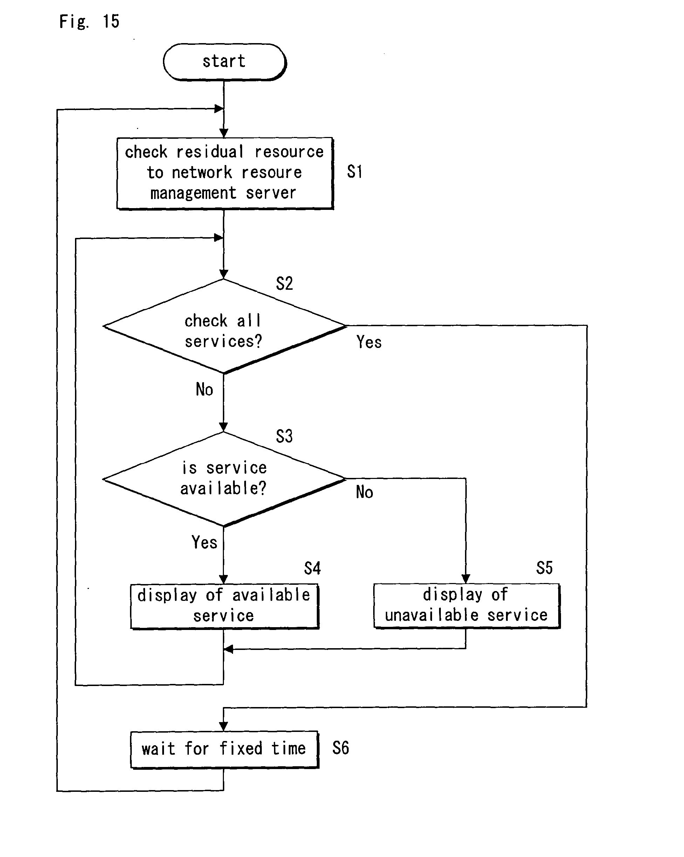

Fig. 15 is a flow chart of the video server 2 according to Embodiment 3.

As shown in Fig. 15, the video server 2 asks the network resource management server 1 about the use state of the present bandwidth in the home network system 100 (Step S1, residual resource check).

Based on the result of the check, the video server 2 judges whether all video programs to be provided (all services that are ready to provide) are able to be provided at present (Step S2, Step S3).

The video server 2 enables, in a video data list, selection of the video program for which a service provision is presently possible (Step S4, a display of available service).

On the other hand, the video server 2 covers a mask over the display of the video program in the video data list, for which a service provision is presently impossible (Step S5, a display of unavailable service).

When the video server 2 judges whether all video programs to be provided are able to be provided at present (Step S2), the video server 2 waits for a fixed period of time (Step S6).

After the fixed period of time, the video server 2 asks the network resource management server 1 about a present use state of the bandwidth in the home network system 100 (Step S1), and performs processing in Steps S2 through S5.

As mentioned above, the video server 2 repeats processing of Step S1 to the step 5 every fixed period of time.

Now, the details of the video server 2 according to Embodiment 3 are explained.

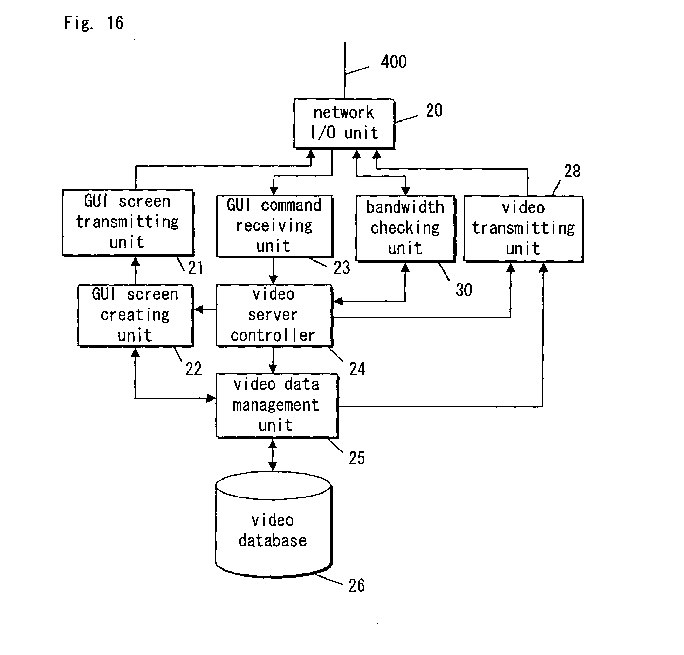

Fig. 16 is a block diagram of the video server 2 according to Embodiment 3. In Fig. 16, the same sign is attached for the same unit as Fig. 7 and explanation is omitted suitably.

As shown in Fig. 16, the video server 2 comprises a network I/O unit 20, a GUI screen transmitting unit 21, a GUI creating unit 22, a GUI command receiving unit 23, a video server controller 24, a video data management unit 25, a video database 26, a bandwidth checking unit 30, and a video transmitting unit 28.

According to Embodiment 3, whenever a use state of the bandwidth in the home network system 100 changes, the network resource management server 1 updates the communication path/reservation information database 16 of Fig. 8. That is, the table of Fig. 9 is updated.

Therefore, the network resource management server 1 grasps the present use state of the bandwidth in the home network system 100.

According to directions of the video server controller 24, the bandwidth checking unit 30 of Fig. 16 asks the network resource management server 1 periodically about a use state of the bandwidth in the home network system 100.

The bandwidth checking unit 30 gives information of a use state of the checked bandwidth to the video data management unit 25.

According to the directions of the video server controller 24, the video data management unit 25 acquires the information on the video program of reproducible video data (available service), based on the information stored in the video database 26.

According to the directions of the video server controller 24, and referring to the use state of the bandwidth which the bandwidth checking unit 30 checked, the video data management unit 25 judges whether the concerned video program is available, and outputs the judgment result together with the information on the concerned video program to the GUI creating unit 22.

In addition, the video data management unit 25 acquires the information on all reproducible video programs, and performs the above-mentioned judgment for every acquired video program.

The GUI creating unit 22 creates a video data list as GUI, based on the judgment result and the information on a video program which the video data management unit 25 outputted according to directions of the video server controller 24.

According to the directions of the video server controller 24, the GUI creating unit 22 indicates a display in which a currently available video program is set to be selected by a user, and in which a currently unavailable video program is set to be prevented for a user from choosing it by masking it,.

When there is a request of service provision from the television 6 or the PC 7, the video server controller 24 directs the GUI screen transmitting unit 21 to transmit the GUI screen information of the present video data list, which the GUI creating unit 22 created, to the television 6 or the PC 7 which has requested the service provision.

In response to these directions, the GUI screen transmitting unit 21 transmits the GUI screen information of the current video data list through the network I/O unit 20.

Thereby, in the example of Fig. 13, the video data list 62 is displayed on the television 6.

Moreover, in the example of Fig. 14, the video data list 63 is displayed on the television 6.

When a user chooses a video program to which the mask is not covered and when the GUI command receiving unit 23 receives, from the television 6 or the PC 7, the request for providing the concerned video program, the GUI command receiving unit 23 gives the information to the video server controller 24.

In response to the information, the video server controller 24 directs the video data management unit 25 to acquire of the concerned video program, and transmit the video data to the transmitting unit 28.

With the directions of the video server controller 24, the video transmitting unit 28 transmits the video data, which the video data management unit 25 acquired through the network I/O unit 20, to the television 6 or the PC 7 which has requested the service provision.

Since a user can not choose a video program that the video server 2 cannot provide, whichever video program a user choose, the video data of the video program can be definitely transmitted.

In the above discussion, it is supposed that a video data list for the video program, whose video data cannot be transmitted, is masked so as to prevent a user from choosing.

However, if the display which a user can distinguish a video program of which transmission of video data is possible, and a video program of which transmission of video data is not possible is realized for a video data list, the display is also usable as well as masking the list as described above.

Moreover, a notation method in the video data list of available services is not limited to what is shown in Figs. 13 or 14.

Moreover, a list of available services varies according to kinds of service provision apparatuses.

Now, as mentioned above, the service which cannot be provided is prevented for a user from choosing in the list of the available service.

Thereby, the service which cannot be provided at the present is prevented for a user from choosing it and also is prevented from requesting service provision for it.

Consequently, a case where a user requests providing a service but the request is refused does not arise. Therefore, the impression of the user having been betrayed can be decreased. That is, a user's dissatisfaction can be decreased.

Moreover, a display which can simply distinguish an available service from an unavailable service can also be placed in the list of available services.

By this, a service which is currently unavailable is beforehand shown to a user.

Consequently, comparing with the case where a request of providing service is refused, the impression that the user's expectation is betrayed can be decreased. That is, a user's dissatisfaction can be released.

Moreover, according to the present embodiment, since currently available services are shown to a user and a user requests a service provision for the shown available services, a situation where the remaining bandwidths which can be used are not used at all is avoided as much as possible, and the effective use of a bandwidth is realized.

Moreover, in the present embodiment, a useless request of service provision will not be made and the burden of the service provision apparatuses can be decreased.

In addition, if there is a function to change a transmitting rate (a function equivalent to the transmitting rate changing unit 29 of Fig. 7) in the video server 2 of the present embodiment, a list of services which can be provided by making the quality lower within the limits of a residual bandwidth may also be displayed on a service receiver such as the television 6.

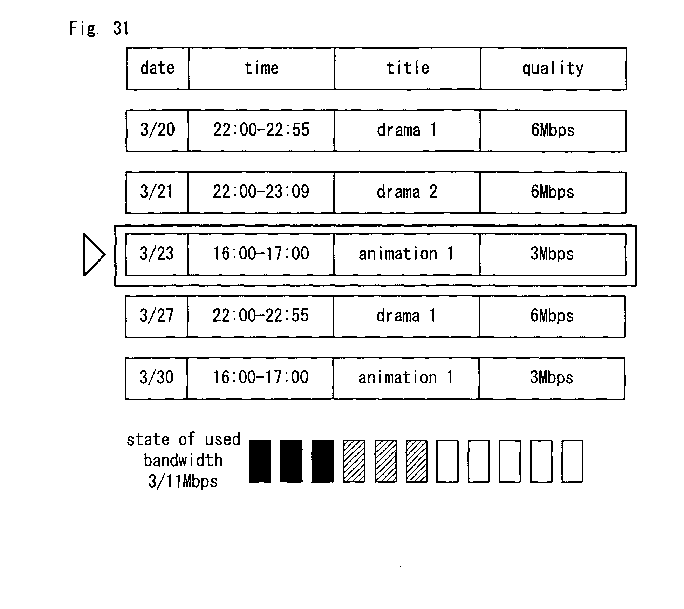

Now, as a display form shown in Fig. 14, display forms as shown in Fig. 31 through Fig. 17 are also applicable.

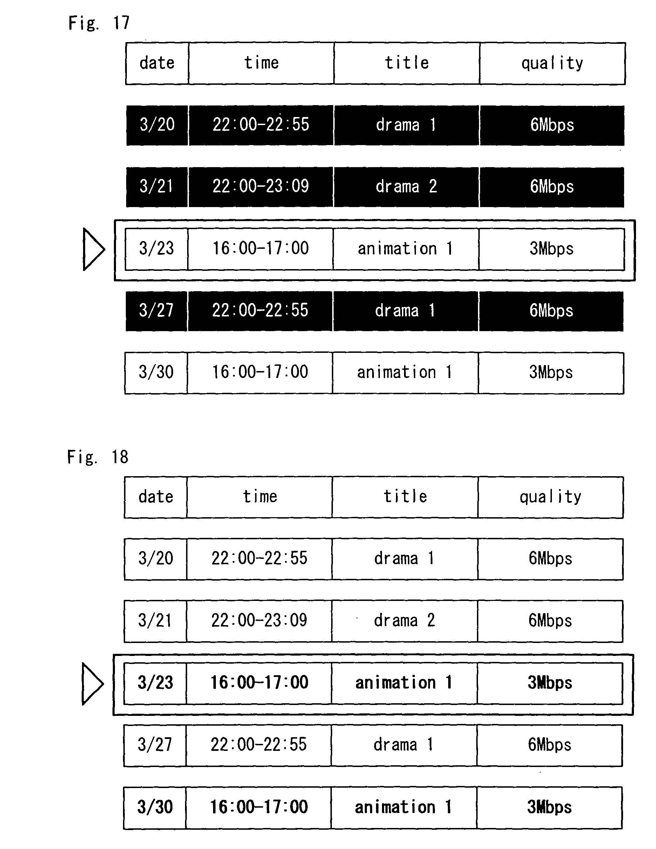

First, in the examples of Fig. 17 to Fig. 21, an unavailable service is prevented for a user from choosing it by covering the corresponding list with a mask.

Masks that indicate what can be chosen affirmative and what cannot be chosen negative are desirable.

For example, it is good to display so that a background of what can be selected be smeared away as shown in Fig. 17, or to display so that characters, a frame, a background, a color, etc. of what can be selected are indicated outstandingly, and on the contrary those what cannot be selected are indicated not outstanding as shown in Fig. 18.

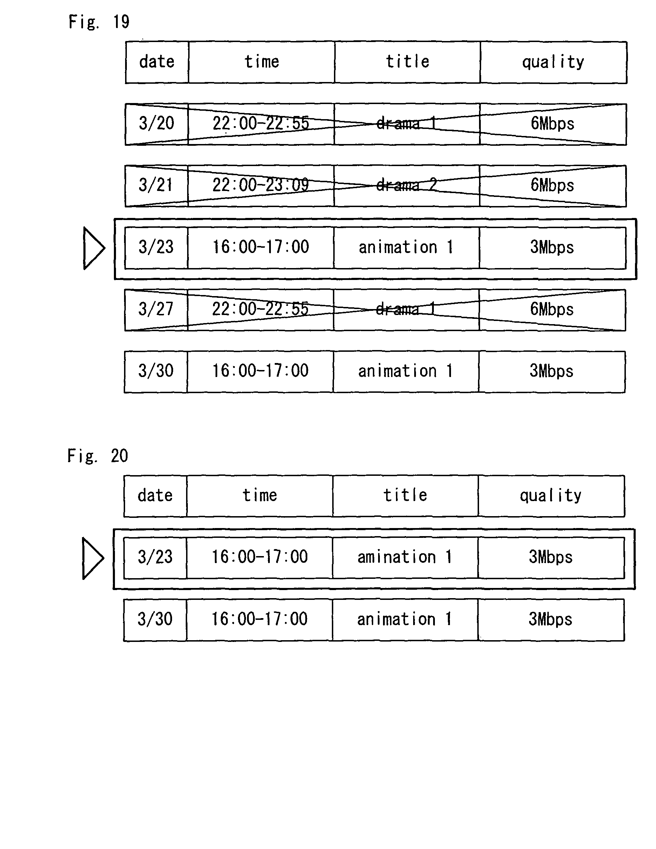

Or as shown in Fig. 19, it is good to give negative indications (for example, pictorial symbol which shows an x mark, a denial line, prohibition, or the meaning of being improper) to what cannot be chosen, and to give affirmative indications (display opposite to the negative indications) to what can be chosen.

Only one of the two kinds of indications may attach these affirmative displays and negative displays, or both indications may be attached.

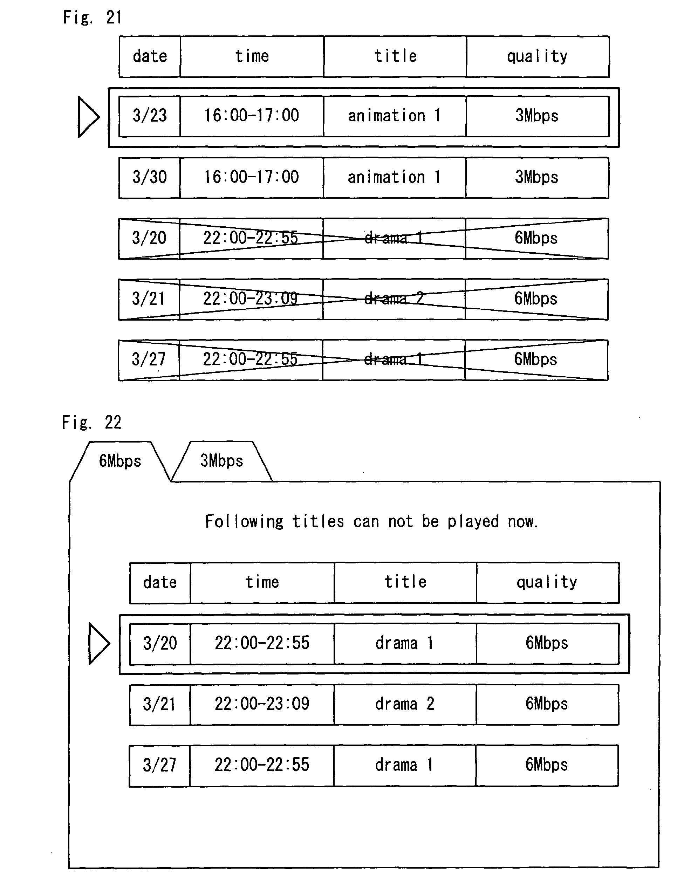

Furthermore, as shown in Fig. 20, only what can be chosen may be displayed. Or as shown in Fig. 21, what can be chosen is displayed with the priority at the top, and what cannot be chosen is displayed at the bottom.

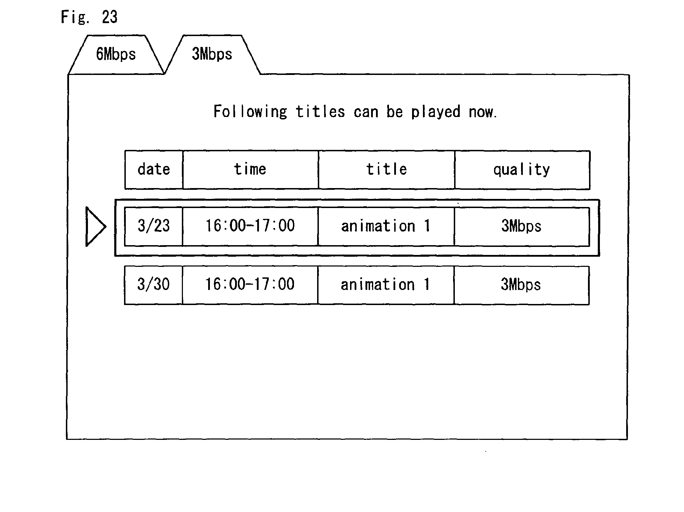

Furthermore, as shown in Fig. 22 and Fig. 23, what can be chosen and what cannot be chosen may be separately displayed on different sheets with tabs. In this case, for the sheet of what cannot be chosen, the tab itself may be designed not to be selected.

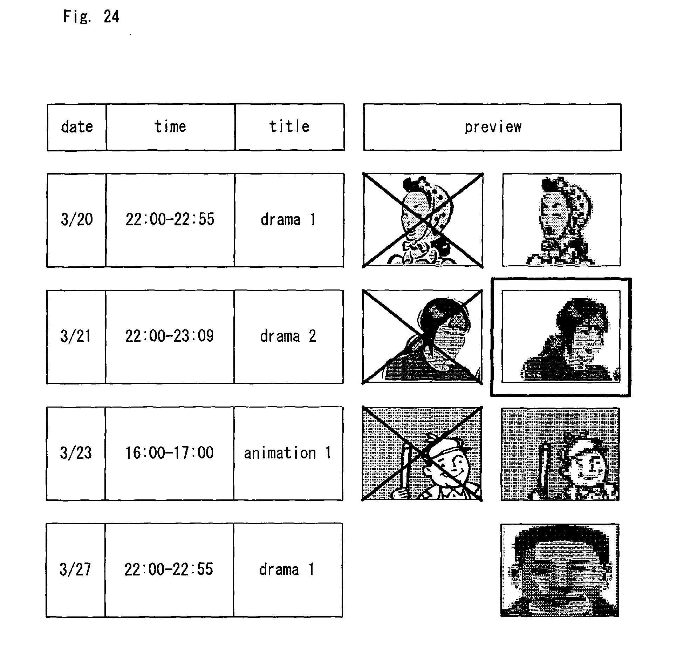

In the above examples, the quality of a title was displayed using the character, as shown in Fig. 24. The quality of a title may be designed so as to be intuitively perceived.

In Fig. 24, the preview column is prepared instead of the quality column. The thumbnail of 6Mbps is displayed on the left-hand side of the preview column, and the thumbnail of 3Mbps is displayed on right-hand side.

Since the title of 6Mbps cannot be chosen in the state of Fig. 24, "x" mark is attached on the thumbnail of 6Mbps.

In addition, since there are no data of 6Mbps, the corresponding thumbnail is not displayed on the title "the drama 1" dated on March 27.

Here, as for the thumbnail of 6Mbps and the thumbnail of 3Mbps, it is desirable to make those display forms differ. The reason is that it is easy for a user to understand the quality intuitively.

In Fig. 24, image data is displayed in reduced size by making it fit to a thumbnail of 6Mbps.

On the other hand, as for a thumbnail of 3Mbps, the reduced image is displayed after performing processing that degrades image quality to that for a thumbnail of 3Mbps

The processing which degrades image quality is arbitrary. It is also possible to cover a video with a mosaic, for example, as shown in Fig. 24.

Other processes may be considered, such as putting in a shading off, blunting an edge, adding a noise, shearing sharpness, dropping color, lowering gradation, reducing the number of frames on a time-axis, making block distortion conspicuous, etc.

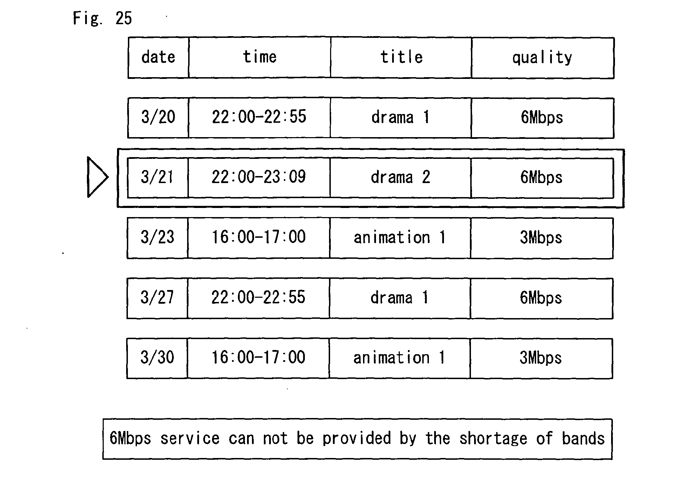

Moreover, as shown in Fig. 25, it is desirable to notify a user the reason why the concerned title cannot be displayed. This is because a user's dissatisfaction can be decreased by obtaining understanding of a user.

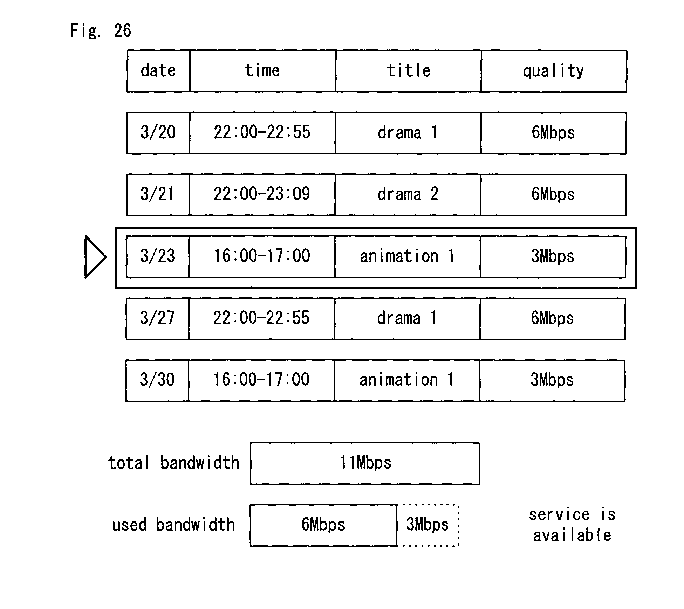

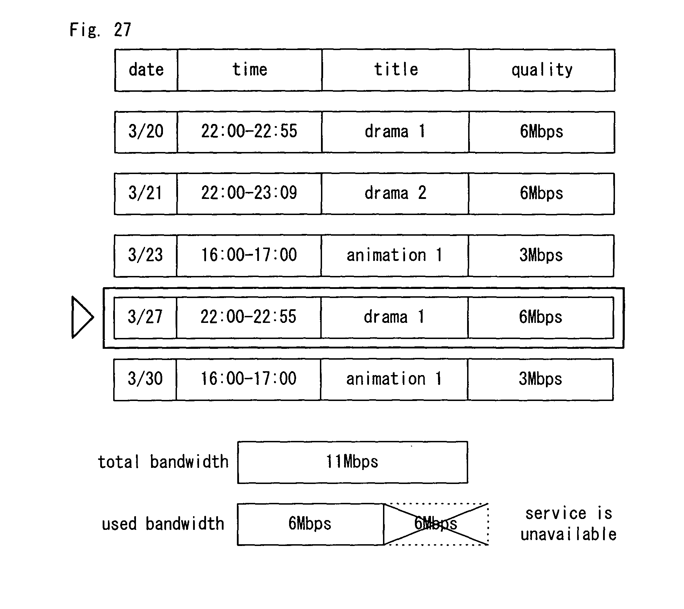

Furthermore, as shown in Fig. 26 and Fig. 27, it is desirable to notify a user the presently used bandwidth and the whole bandwidth by comparing them.

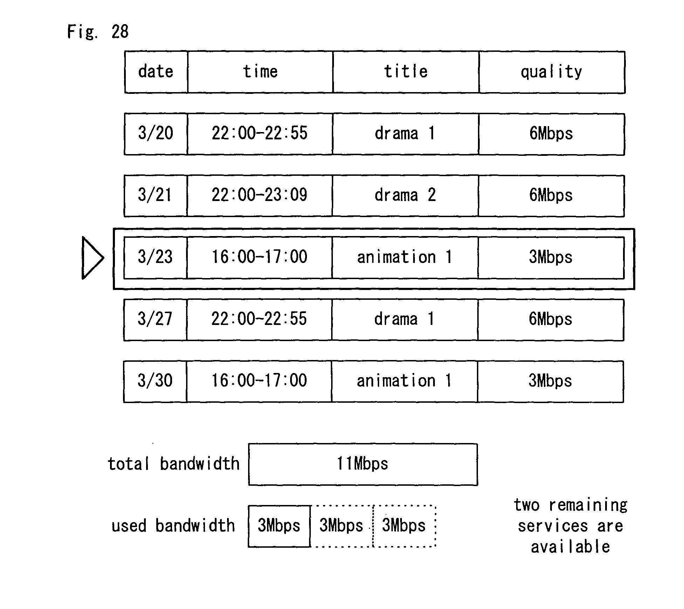

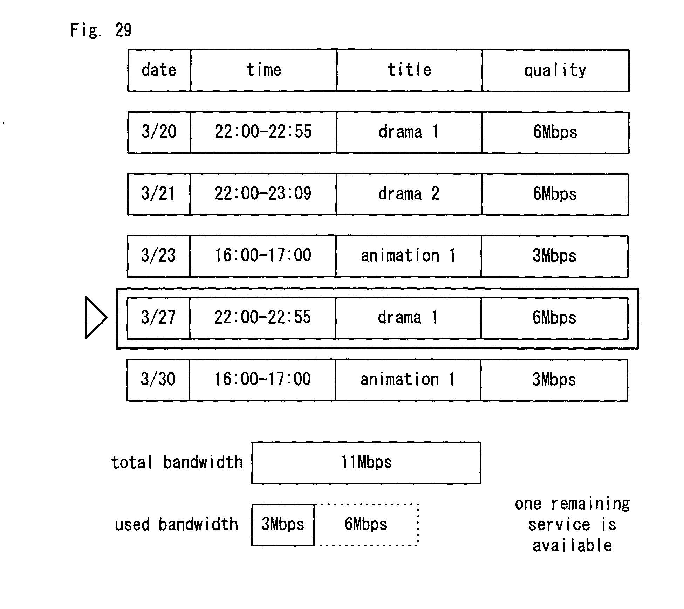

Moreover, as shown in Fig. 28 and Fig. 29, it is also desirable to notify a user what kinds of other services can be provided.

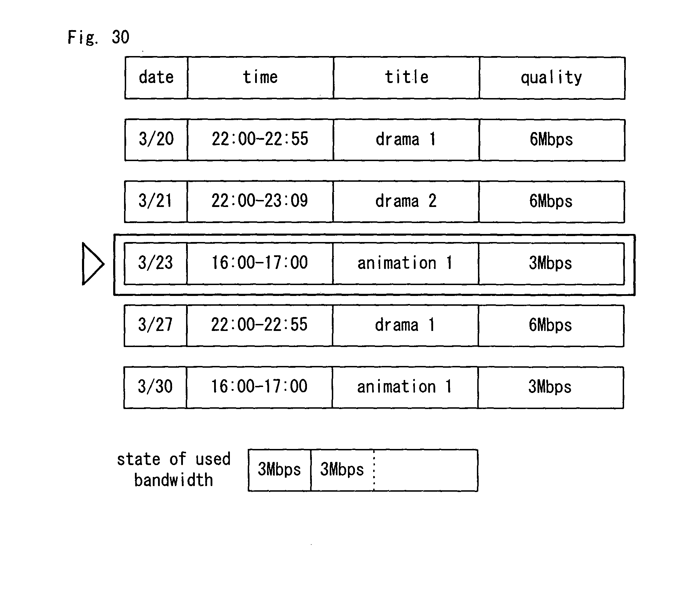

Furthermore, as shown in Fig. 30 and Fig. 31, it is also desirable to display a used bandwidth, graphically and comprehensively.

By the service-providing method according to claim 1, even when it is impossible to provide a service of the quality that a user demands, a service with lower quality can be provided.

Therefore, although the quality of the provided service is lower than the quality of the service that a user demands, a service can be provided at least when a use wants to receive the service, a user's dissatisfaction can be lessened as compared with the case a service is not possible to be provided at all.

By the service-providing method according to claim 2, even when it is impossible to provide a service of the quality that a user demands, a service with lower quality can be provided.

Therefore, although the quality of the provided service is lower than the quality of the service that a user demands, a service can be provided at least when a use wants to receive the service, a user's dissatisfaction can be lessened as compared with the case a service is not possible to be provided at all.

By the service-providing method according to claim 3, even when it is impossible to provide a service of the quality that a user demands, a service with lower quality can be provided.

Therefore, although the quality of the provided service is lower than the quality of the service that a user demands, a service can be provided at least when a use wants to receive the service, a user's dissatisfaction can be lessened as compared with the case a service is not possible to be provided at all.

By the service-providing method according to claim 4, a user's convenience can be improved.

By the service-providing method according to claim 5, since a service of high quality that a user demands at the beginning is provided when the service becomes possible to be provided, the user's satisfaction can be raised.

By the service-providing method according to claim 6, when a service of high quality that a user demands at the beginning becomes possible to be provided, and when the user requests for providing, the service of high quality is provided to the user. Hence the user's satisfaction can be raised.

By the service-providing method according to claim 7, since a service of high quality that a user demands at the beginning is provided when the service becomes possible to be provided, the user's satisfaction can be raised.

By the service-providing method according to claim 8, a user's convenience can be improved.

By the service-providing method according to claim 9, it is impossible for a user to request providing a service that is not possible to be currently provided.

Consequently, the impression that the user's expectation might have been betrayed can be lessened, as compared with the case where the demand is completely refused, although the service is required.

By the service-providing method according to claim 10, a currently unavailable service is shown to a user beforehand.

Consequently, the impression that the user's expectation might have been betrayed can be lessened, as compared with the case where the demand is completely refused, although the service is required. In other words, a user's dissatisfaction can be released.

By the service-providing method according to claim 11, a currently unavailable service is not possible to be selected or requested by a user. Therefore, the user's dissatisfaction can be released.

By the service-providing method according to claim 12, a situation where a remaining part of the available bandwidths is not used at all can be avoided as much as possible, and hence the bandwidth is effectively used.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. A service-providing method using a service-providing unit operable to provide a requested service comprising:
providing a service having lower quality than quality of the requested service, when a network resource required for the requested service is not reservable.

2. A service-providing method using a service-providing unit operable to provide a requested service comprising:
checking whether or not a network resource required for the requested service is reservable to generate a first result;
checking whether or not a network resource required for a service of lower quality than the quality of the requested service is reservable to generate a second result, when the first result shows that the network resource required for the requested service is not reservable;
notifying that the service of lower quality is reservable to request a response, when the second result shows that the service of lower quality is reservable; and
providing the service of lower quality, when the response shows that the service of lower quality is requested.

3. A service-providing method using a service-providing unit operable to provide a requested service comprising:
checking whether or not a network resource required for the requested service is reservable to generate a first result;
checking whether or not a network resource required for a service of lower quality than the quality of the requested service is reservable to generate a second result, when the first result shows that the network resource required for the requested service is reservable; and
providing the service of lower quality, when the second result shows that the service of lower quality is requested.

4. A service-providing method using a service-providing unit operable to provide a requested service comprising first steps and second steps, the first steps comprising:
checking whether or not a network resource required for the requested service is reservable to generate a first result;
checking whether or not a network resource required for a service of lower quality than the quality of the requested service is reservable to generate a second result, when the first result shows that the network resource required for the requested service is not reservable;
notifying that the service of lower quality is reservable to request a response, when the second result shows that the service of lower quality is reservable; and
providing the service of lower quality, when the response shows that the service of lower quality is requested,
the second steps comprising:
checking whether or not the network resource required for the requested service is reservable to generate a third result;
checking whether or not the network resource required for the service of lower quality than the quality of the requested service is reservable to generate a fourth result, when the third result shows that the network resource required for the requested service is not reservable; and
providing the service of lower quality, when the fourth result shows that the service of lower quality is requested,
wherein the first steps and the second steps are able to be switched over.

5. The service-providing method as defined in claim 1, further comprising:
providing a service having higher quality than quality of a current service, when a network resource required for a service of higher quality than the quality of the current service is reservable.

6. The service-providing method as defined in claim 1, further comprising:
checking whether or not a network resource required for a service of higher quality than quality of a current service is reservable to generate a third result;
notifying that the service of higher quality is reservable to request an additional response, when the third result shows that the service of higher quality is reservable; and
providing the service of higher quality, when the additional response shows that the service of higher quality is requested.

7. The service-providing method as defined in claim 1, further comprising:
checking whether or not a network resource required for a service of higher quality than the quality of a current service is reservable to generate a third result; and
providing the service of higher quality, when the third result shows that the service of higher quality is reservable.

8. A service-providing method using a service-providing unit operable to provide a requested service comprising first steps and second steps,
the first steps comprising:
checking whether or not a network resource required for the requested service is reservable to generate a first result;
checking whether or not a network resource required for a service of lower quality than the quality of the requested service is reservable to generate a second result, when the first result shows that the network resource required for the requested service is not reservable;
notifying that the service of lower quality is reservable to request a response, when the second result shows that the service of lower quality is reservable;
providing the service of lower quality, when the response shows that the service of lower quality is requested;
checking whether or not a network resource required for a service of higher quality than quality of a current service is reservable to generate a third result;
notifying that the service of higher quality is reservable to request an additional response, when the third result shows that the service of higher quality is reservable; and
providing the service of higher quality, when the additional response shows that the service of higher quality is requested,
the second steps comprising:
checking whether or not the network resource required for the requested service is reservable to generate a third result;
checking whether or not the network resource required for the service of lower quality than the quality of the requested service is reservable to generate a fourth result, when the third result shows that the network resource required for the requested service is not reservable;
providing the service of lower quality, when the fourth result shows that the service of lower quality is requested;
checking whether or not a network resource required for a service of higher quality than the quality of a current service is reservable to generate a third result; and
providing the service of higher quality, when the third result shows that the service of higher quality is reservable,
wherein the first steps and the second steps are able to be switched over.

9. A service-providing method using a service-providing unit operable to provide a requested service comprising:
checking an availability of a network resource to generate a first result;
judging whether or not the requested service is able to provide, based on the first result, to generate a second result; and
preventing from requesting a service that is not able to provide, based on the second result.

10. A service-providing method using a service-providing unit operable to provide a service chosen from a list of available services comprising:
checking an availability of a network resource to generate a first result;
judging whether or not the requested service is able to provide, based on the first result, to generate a second result; and
recording the list an item that is able to distinguish between an available service and an unavailable service, based on the second result.

11. The service-providing method as defined in claim 10, further comprising:
preventing from selecting an unavailable service on the list.

12. The service-providing method as defined in claim 1, wherein the network resource is a bandwidth.
